(19) Europäisches Patentamt
European Patent Office
Office européen des brevets

(11) EP 4 661 536 A1

(12) EUROPEAN PATENT APPLICATION
published in accordance with Art. 153(4) EPC

(43) Date of publication:
10.12.2025 Bulletin 2025/50

(51) International Patent Classification (IPC):
H04W 72/04 (2023.01)

(21) Application number: 24749593.0

(22) Date of filing: 25.01.2024

(52) Cooperative Patent Classification (CPC):
H04W 72/04; H04W 72/0453; H04W 72/12;
H04W 72/232

(86) International application number:
PCT/CN2024/073935

(87) International publication number:
WO 2024/160112 (08.08.2024 Gazette 2024/32)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 01.02.2023 CN 202310050792

(71) Applicant: Vivo Mobile Communication Co., Ltd.
Dongguan, Guangdong 523863 (CN)

(72) Inventors:
• LIU, Siqi
Dongguan, Guangdong 523863 (CN)
• JI, Zichao
Dongguan, Guangdong 523863 (CN)

(74) Representative: Shieldmark
P.O. Box 90471
2509 LL The Hague (NL)

(54) **BWP DETERMINATION METHOD, TRANSMISSION METHOD, APPARATUS, TERMINAL AND NETWORK-SIDE DEVICE**

(57) The present application discloses a BWP determining method, a transmission method, an apparatus, a terminal, and a network-side device, and belongs to the field of communication technologies. The BWP determining method in embodiments of the present application includes: determining, by a terminal, a target BWP according to target information in first DCI, or determining, by a terminal, a current active BWP or a specific BWP as a target BWP corresponding to first DCI, where the first DCI is DCI capable of scheduling a plurality of cells or a plurality of carriers (201); and performing, by the terminal, transmission on the target BWP (202), where the target information includes BWP indicator and/or first information. The first information includes at least one of the following: the target BWP determined according to the first DCI is the current active BWP, the first DCI does not indicate or trigger a BWP change, or the terminal ignores at least some bits of the BWP indicator; or the first information indicates at least one of the following: the target BWP determined according to the first DCI is not the current active BWP, the first DCI indicates or triggers a BWP change, or the terminal determines the target BWP based on at least some bits of the BWP indicator.

A terminal determines a target BWP according to target information in first DCI, or the terminal determines a current active BWP or a specific BWP as a target BWP corresponding to first DCI, the first DCI being DCI capable of scheduling a plurality of cells or a plurality of carriers — 201

The terminal performs transmission on the target BWP — 202

FIG. 2

## Description

### CROSS-REFERENCE TO RELATED APPLICATIONS

The present application claims priority to Chinese Patent Application No. 202310050792.2, filed in China on February 1, 2023, which is incorporated herein by reference in its entirety.

### TECHNICAL FIELD

The present application belongs to the field of communication technologies, and specifically relates to a BWP determining method, a transmission method, an apparatus, a terminal, and a network-side device.

### BACKGROUND

In a related technology, one piece of downlink control information (Downlink Control Information, DCI) can schedule only uplink (Uplink, UL) or downlink (Downlink, DL) data on one cell (cell), thereby causing a large amount of DCI overheads in a case of carrier aggregation (Carrier Aggregation, CA). To save DCI overheads, enable more resources to be used for UL or DL transmission, and improve system throughput, one piece of DCI needs to be supported to simultaneously schedule UL or DL transmission on a plurality of cells. A terminal may be configured with a plurality of cells. mc-DCI may schedule a combination of a plurality of cells in a cell set (cell set). Each cell or cell combination has a different parameter configuration and feature. The mc-DCI may further trigger a bandwidth part (Bandwidth Part, BWP) change for a plurality of cells. However, in a scenario in which multi-cell scheduling is performed based on the mc-DCI, it is not yet clear how to determine a BWP.

### SUMMARY

Embodiments of the present application provide a BWP determining method, a transmission method, an apparatus, a terminal, and a network-side device, to resolve a problem of how to determine that a BWP is not yet clear in a scenario in which multi-cell scheduling is performed based on mc-DCI in a related technology.

According to a first aspect, a BWP determining method is provided, including:

determining, by a terminal, a target BWP according to target information in first downlink control information DCI, or determining, by the terminal, a current active BWP or a specific BWP as a target BWP corresponding to first DCI, the first DCI being DCI capable of scheduling a plurality of cells or a plurality of carriers; and

performing, by the terminal, transmission on the target BWP;

where the target information includes at least one of the following: a BWP indicator or first information; and

the first information indicates at least one of the following: the target BWP determined according to the first DCI is the current active BWP, the first DCI does not indicate or trigger a BWP change, or the terminal ignores at least some bits of the BWP indicator; or

the first information indicates at least one of the following: the target BWP determined according to the first DCI is not the current active BWP, the first DCI indicates or triggers a BWP change, or the terminal determines the target BWP based on at least some bits of the BWP indicator.

According to a second aspect, a transmission method is provided, including:

reporting, by a terminal, first signaling, or receiving, by a terminal, a first configuration of a network-side device;

where the first signaling or the first configuration is related to a BWP change based on first DCI, and the first DCI is DCI capable of scheduling a plurality of cells or a plurality of carriers.

According to a third aspect, a transmission method is provided, including:

receiving, by a network-side device, first signaling sent by a terminal, or sending, by a network-side device, a first configuration to a terminal;

where the first signaling or the first configuration is related to a BWP change based on first DCI, and the first DCI is DCI capable of scheduling a plurality of cells or a plurality of carriers.

According to a fourth aspect, a BWP determining apparatus is provided, including:

a determining module, configured to determine a target BWP according to target information in first DCI, or configured to determine a current active BWP or a specific BWP as a target BWP corresponding to first DCI, the first DCI being DCI capable of scheduling a plurality of cells or a plurality of carriers; and

a first transmission module, configured to perform transmission on the target BWP;

where the target information includes at least one of the following: a BWP indicator or first information; and

the first information indicates at least one of the following: the target BWP determined according to the first DCI is the current active BWP, the first DCI does not indicate or trigger a BWP change, or the apparatus ignores at least some bits of the BWP indicator; or

the first information indicates at least one of the following: the target BWP determined according to the first DCI is not the current active BWP, the first DCI indicates or triggers a BWP change, or the apparatus determines the target BWP based on at least some bits of the BWP indicator.

According to a fifth aspect, a transmission apparatus is provided, including:

a second transmission module, configured to report first signaling, or configured to receive a first configuration of a network-side device;
where the first signaling or the first configuration is related to a BWP change based on first DCI, and the first DCI is DCI capable of scheduling a plurality of cells or a plurality of carriers.

According to a sixth aspect, a transmission apparatus is provided, including:

a third transmission module, configured to receive first signaling sent by a terminal, or configured to send a first configuration to a terminal;
where the first signaling or the first configuration is related to a BWP change based on first DCI, and the first DCI is DCI capable of scheduling a plurality of cells or a plurality of carriers.

According to a seventh aspect, a terminal is provided. The terminal includes a processor and a memory. The memory stores a program or instructions capable of running on the processor, and when the program or the instructions are executed by the processor, the steps of the method according to the first aspect or the second aspect are implemented.

According to an eighth aspect, a terminal is provided, including a processor and a communication interface, where the processor is configured to determine a target BWP according to target information in first DCI, or is configured to determine a current active BWP or a specific BWP as a target BWP, the first DCI being DCI capable of scheduling a plurality of cells or a plurality of carriers; and the communication interface is configured to perform transmission on the target BWP;

where the target information includes at least one of the following: a BWP indicator or first information; and
the first information indicates at least one of the following: the target BWP determined according to the first DCI is the current active BWP, the first DCI does not indicate or trigger a BWP change, or the terminal ignores at least some bits of the BWP indicator; or
the first information indicates at least one of the following: the target BWP determined according to the first DCI is not the current active BWP, the first DCI indicates or triggers a BWP change, or the terminal determines the target BWP based on at least some bits of the BWP indicator.

According to a ninth aspect, a terminal is provided, including a processor and a communication interface. The communication interface is configured to report first signaling, or is configured to receive a first configuration of a network-side device; where the first signaling or the first configuration is related to a BWP change based on first DCI, and the first DCI is DCI capable of scheduling a plurality of cells or a plurality of carriers.

According to a tenth aspect, a network-side device is provided. The network side device includes a processor and a memory. The memory stores a program or instructions capable of running on the processor, and when the program or the instructions are executed by the processor, the steps of the method according to the third aspect are implemented.

According to an eleventh aspect, a network-side device is provided, including a processor and a communication interface. The communication interface is configured to receive first signaling sent by a terminal, or is configured to send a first configuration to a terminal; where the first signaling or the first configuration is related to a BWP change based on first DCI, and the first DCI is DCI capable of scheduling a plurality of cells or a plurality of carriers.

According to a twelfth aspect, a communication system is provided, including a terminal and a network-side device. The terminal may be configured to perform the steps of the method according to the first aspect or the second aspect, and the network-side device may be configured to perform the steps of the method according to the third aspect.

According to a thirteenth aspect, a readable storage medium is provided. The readable storage medium stores a program or instructions, and when the program or the instructions are executed by a processor, the steps of the method according to the first aspect are implemented, the steps of the method according to the second aspect are implemented, or the steps of the method according to the third aspect are implemented.

According to a fourteenth aspect, a chip is provided. The chip includes a processor and a communication interface, the communication interface is coupled to the processor, and the processor is configured to run a program or instructions to implement the method according to the first aspect, implement the method according to the second aspect, or implement the method according to the third aspect.

According to a fifteenth aspect, a computer program/program product is provided. The computer program/program product is stored in a storage medium, and the computer program/program product is executed by at least one processor to implement the steps of the method according to the first aspect, the steps of the method according to the second aspect, or the steps of the method according to the third aspect.

In the embodiments of the present application, the terminal can determine the target BWP according to the first DCI capable of scheduling a plurality of cells or a plurality of carriers, or determine the current active BWP or the specific BWP as the target BWP, and then perform transmission on the target BWP. Therefore, it is clear how the terminal determines the target BWP for performing transmission, so as to ensure communication between the terminal and the network-side device in a multi-cell scheduling scenario.

## BRIEF DESCRIPTION OF DRAWINGS

FIG. 1 is a block diagram of a wireless communication system applicable to an embodiment of the present application;
FIG. 2 is a flowchart of a BWP determining method according to an embodiment of the present application;
FIG. 3 is a flowchart of a transmission method according to an embodiment of the present application;
FIG. 4 is a flowchart of another transmission method according to an embodiment of the present application;
FIG. 5 is a structural diagram of a BWP determining apparatus according to an embodiment of the present application;
FIG. 6 is a structural diagram of a transmission apparatus according to an embodiment of the present application;
FIG. 7 is a structural diagram of another transmission apparatus according to an embodiment of the present application;
FIG. 8 is a structural diagram of a communication device according to an embodiment of the present application;
FIG. 9 is a structural diagram of a terminal according to an embodiment of the present application; and
FIG. 10 is a structural diagram of a network-side device according to an embodiment of the present application.

## DESCRIPTION OF EMBODIMENTS

The following clearly describes technical solutions in embodiments of the present application with reference to accompanying drawings in the embodiments of this application. Clearly, the described embodiments are merely some rather than all of the embodiments of the present application. All other embodiments obtained by a person of ordinary skill in the art based on the embodiments of the present application shall fall within the protection scope of the present application.

Terms "first", "second", and the like in the specification and claims of the present application are used to distinguish between similar objects instead of describing a specified order or sequence. It should be understood that, terms used in this way is interchangeable under appropriate circumstances, so that embodiments of the present application can be implemented in a sequence other than that illustrated or described herein. Moreover, the terms "first" and "second" typically distinguish between objects of one category rather than limiting a quantity of objects. For example, there can be one or more first objects. In addition, in the specification and claims, "and/or" represents at least one of connected objects, and the character "/" generally represents an "or" relationship between associated objects.

It should be noted that, a technology described in embodiments of the present application is not limited to a long term evolution (Long Term Evolution, LTE)/LTE-advanced (LTE-Advanced, LTE-A) system, and can be further used in other wireless communication systems, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. Terms "system" and "network" are often used interchangeably in embodiments of the present application. The described technology can be used for the systems and radio technologies described above, as well as other systems and radio technologies. The following describes a new radio (New Radio, NR) system for illustrative purposes, and NR terms are used in most of the following descriptions. However, these technologies are also applicable to applications other than NR system applications, for example, a 6th generation (6th Generation, 6G) communication system.

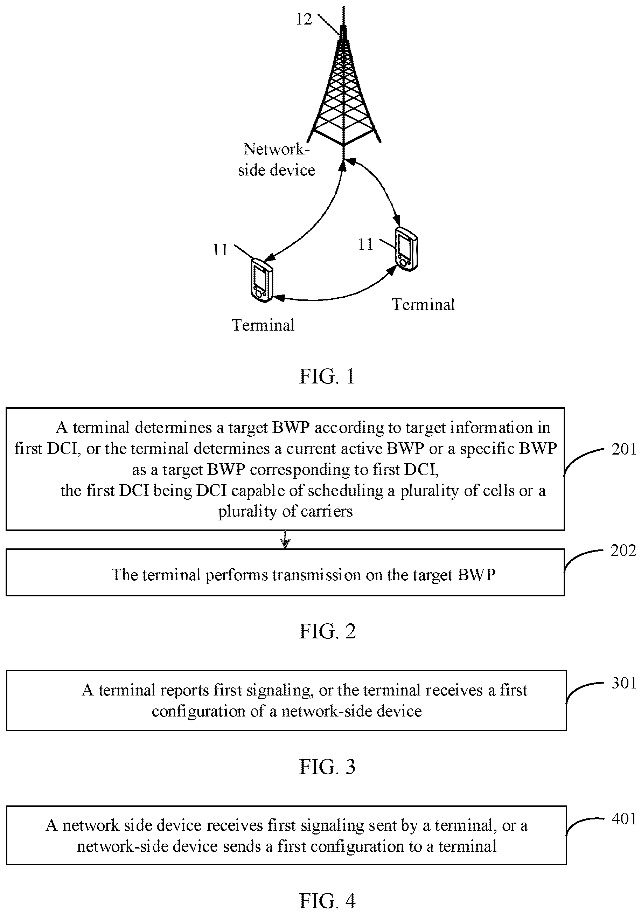

FIG. 1 is a block diagram of a wireless communication system applicable to an embodiment of the present application. The wireless communication system includes a terminal 11 and a network-side device 12. The terminal 11 may be a terminal-side device such as a mobile phone, a tablet personal computer (Tablet Personal Computer), a laptop computer (Laptop Computer) that is alternatively referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device with a wireless communication function, such as a refrigerator, a television, a laundry machine, or a furniture), a gaming console, a personal computer (personal computer, PC), a teller machine, or a self-service machine. The wearable device includes: a smart watch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. It should be noted that a specific type of the terminal 11 is not limited in this embodiment of the present application. The network-side device 12 may include an access network device or a core network device. The access network device may also be referred to as a wireless access network device, a radio access network (Radio Access Network, RAN), a radio access network function, or a radio access network unit. The access network device may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (Transmission Reception Point, TRP), or another appropriate term in the field. Provided that same technical effects are achieved, the base station is not limited to a specific technical term. It should be noted that in the embodiments of the present application, only a base station in an NR system is used as an example for description, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that in this embodiment of the present application, only a core network device in the NR system is used as an example for description, and a specific type of the core network device is not limited.

For a better understanding, the following describes possible related concepts and principles in this embodiment of the present application.

Currently, a 5G NR system supports configuring one or more component carriers (Component Carrier, CC) or cells for UE. In a related technology, one piece of DCI can schedule only one cell or a physical downlink shared channel (Physical downlink shared channel, PDSCH) or a physical uplink shared channel (Physical Uplink Shared Channel, PUSCH) on one CC.

For each scheduled cell, the UE does not expect that a quantity of different DCI sizes (size) for performing physical downlink control channel (Physical downlink control channel, PDCCH) monitoring exceeds 4, or does not expect that a quantity of different DCI sizes for performing PDCCH monitoring on cell radio network temporary identifier (Cell Radio Network Temporary Identifier, C-RNTI) scrambling exceeds 3.

Size of a field of DCI 0_1:

In the field of the DCI 0_1, a majority of fields are of a fixed size, or the size of the field is determined based on a configuration or a characteristic of a scheduled cell. The following fields are special cases:

a carrier indicator field (Carrier Indicator Field, CIF): when a cell scheduled by the DCI and a cell in which the DCI is located are not a same cell (that is, cross-carrier scheduling), the CIF field is of 3 bits; and when the cell scheduled by the DCI and the cell in which the DCI is located are a same cell (that is, self-scheduling), whether there is a CIF depends on a configuration parameter of radio resource control (Radio Resource Control, RRC) for the self-scheduling; and
a secondary cell (Secondary Cell, Scell) dormancy indication (dormancy indication) field: when all the following conditions are met:

a. the DCI is transmitted within a discontinuous reception (Discontinuous Reception, DRX) active time (active Time) of a primary cell (Primary cell, Pcell);
b. at least one Scell is configured with a dormancy group within active time (dormancyGroupWithinActiveTime); and
c. at least one Scell is configured with two or more downlink (Downlink, DL) BWPs,

the Scell dormancy indication field exists, and a size of the Scell dormancy indication field is determined based on a quantity of groups (Group) configured for the Scell.

Size of a field of DCI 1_1:

In the field of the DCI 1_1, a majority of fields are of a fixed size, or the size of the field is determined based on a configuration or a characteristic of a scheduled cell. The following fields are special cases:

a CIF field: when a cell scheduled by the DCI and a cell in which the DCI is located are not a same cell (that is, cross-carrier scheduling), the CIF field is of 3 bits; and when the cell scheduled by the DCI and the cell in which the DCI is located are a same cell (that is, self-scheduling), whether there is a CIF depends on a configuration parameter of RRC for self-scheduling;

a transmission configuration indication (Transmission configuration indication) field: the field is configured in each control resource set (Control resource set, Coreset) of a BWP of a scheduled cell; and when a plurality of Coreset configurations of one BWP are different, the size of the field is different (0 or 3 bits), and when a plurality of search spaces on one BWP are associated with different Coresets and the size of DCI 1_1 is different, it is necessary to add 0 at the back to unify to a largest size; and

an Scell dormancy indication field: when all the following conditions are met:

    a. the DCI is transmitted within a DRX active Time of a Pcell;
    b. at least one Scell is configured with a dormancyGroupWithinActiveTime; and
    c. at least one Scell is configured with two or more DL BWPs,

the Scell dormancy indication field exists, and a size of the Scell dormancy indication field is determined based on a quantity of groups (Group) configured for the Scell.

About BWP:

A plurality of BWPs may be configured on one cell. However, only one BWP can be activated at one time point, which is referred to as an active BWP. The UE determines a DCI size based on the active BWP. That is, if the BWP changes, the DCI size may also change. However, at a same time point, for a scheduled cell, one DCI format (format) has only one DCI size.

In a related technology, one piece of DCI can schedule only UL or DL data on one cell, thereby causing a large amount of DCI overheads in a case of CA. To save DCI overheads, enable more resources to be used for UL or DL transmission, and improve system throughput, one piece of DCI needs to be supported to simultaneously schedule UL or DL transmission on a plurality of cells. Multi-cell scheduling DCI (multi-cell scheduling DCI, mc-DCI) may schedule a combination formed by a plurality of cells in a cell set (cell set). Each cell or cell combination has a different parameter configuration and feature. A size of a field (field) in the DCI varies with a BWP change. However, in a multi-cell scheduling scenario, a mechanism for determining a BWP for transmission is not yet clear. For these problems, the present application provides a BWP determining method.

With reference to accompanying drawings, the following describes in detail the BWP determining method provided in embodiments of the present application by using some embodiments and application scenarios thereof.

Referring to FIG. 2, FIG. 2 is a flowchart of a BWP determining method according to an embodiment of the present application. The method is applied to a terminal. As shown in FIG. 2, the method includes the following steps:

Step 201: A terminal determines a target BWP according to target information in first DCI, or the terminal determines a current active BWP or a specific BWP as a target BWP corresponding to first DCI, the first DCI being DCI capable of scheduling a plurality of cells or a plurality of carriers.

The target information includes at least one of the following: a BWP indicator or first information; and

the first information indicates at least one of the following: the target BWP determined according to the first DCI is the current active BWP, the first DCI does not indicate or trigger a BWP change, or the terminal ignores at least some bits (e.g., subsequent X0 bits) of the BWP indicator; or

the first information indicates at least one of the following: the target BWP determined according to the first DCI is not the current active BWP, the first DCI indicates or triggers a BWP change, or the terminal determines the target BWP based on at least some bits of the BWP indicator.

It should be noted that in the present application, determining the target BWP according to the first DCI may also be interpreted as determining a BWP corresponding to or scheduled by the first DCI; or in the present application, the target BWP determined according to the first DCI or the BWP indicator may also be interpreted as a BWP corresponding to or scheduled by the first DCI.

It should be noted that the first DCI may be DCI that is the latest one sent to the terminal by a network-side device and that can be used to schedule a plurality of cells or a plurality of carriers, or may be one piece of DCI determined by the terminal from a plurality of pieces of DCI that can be used to schedule a plurality of cells or a plurality of carriers, or the like. The first DCI may also be referred to as multi-cell scheduling DCI (multi-cell scheduling DCI, mc-DCI).

Optionally, the first DCI includes at least one of the following:

currently received first DCI;
last received first DCI;
DCI corresponding to a specific cell with a minimum or maximum identifier or index;
DCI that is in DCI within a target time unit and that corresponding to maximum or minimum count information (e.g., a count corresponding to a downlink assignment index (Downlink assignment index, DAI));

DCI that is in DCI within a target time unit and that corresponds to a maximum or minimum identifier or index;

DCI for scheduling a physical downlink shared channel (Physical Downlink Shared Channel, PDSCH) or physical uplink shared channel (Physical Uplink Shared Channel, PUSCH) whose start time is the earliest or the latest;

DCI for scheduling a PDSCH or PUSCH whose end time is the earliest or the latest;

DCI corresponding to a cell set (cell set) or cell combination (cell combination) with a maximum or minimum identifier or index;

DCI corresponding to a cell set including a maximum or minimum quantity of cell combinations; or

DCI corresponding to a cell set or cell combination including a maximum or minimum quantity of cells.

The foregoing identifier or index is also a corresponding ID (Identity), for example, a cell ID is also a cell identifier or cell index. The foregoing time unit includes but is not limited to a symbol, a slot (slot), a span (span), a monitoring occasion (monitoring occasion, MO), a subframe (subframe), a frame (frame), a periodicity (periodicity), or the like.

For example, the network-side device may send the first DCI to the terminal at a specific frequency or periodicity, and the terminal can continuously receive the first DCI. Optionally, the first DCI may be the first DCI currently received by the terminal, or may be the last DCI received by the terminal, DCI that is in a plurality of pieces of DCI received by the terminal and that corresponds to a maximum or minimum cell identifier, or the like. Excessive examples are omitted herein.

It should be noted that the foregoing corresponding may also be interpreted as scheduling. For example, the corresponding cell set may also refer to a scheduled cell set, and the corresponding cell combination may also refer to a scheduled cell combination. For subsequent references to this concept in this embodiment of the present application, reference may be made to the interpretation provided herein, and further descriptions are omitted for brevity.

Optionally, if the terminal receives a plurality of pieces of first DCI within the target time unit, the last DCI is at least one of the following:

first DCI that is in the plurality of pieces of first DCI and that corresponds to a specific cell with a minimum or maximum identifier or index;

DCI that is in the plurality of pieces of first DCI and that corresponds to maximum or minimum count information;

DCI that is in the plurality of pieces of first DCI and that corresponds to a maximum or minimum identifier or index;

the DCI for scheduling the PDSCH or PUSCH whose start time is the earliest or the latest;

the DCI for scheduling the PDSCH or PUSCH whose end time is the earliest or the latest;

the DCI corresponding to the cell set or cell combination with the maximum or minimum identifier or index;

the DCI corresponding to the cell set including the maximum or minimum quantity of cell combinations; or

the DCI corresponding to the cell set or cell combination including the maximum or minimum quantity of cells.

The target time unit includes but is not limited to a current time unit, a last time unit, specific T time units (T is a positive integer), or the like. For interpretation of the time unit, reference may be made to the foregoing description. For example, if the terminal receives a plurality of pieces of first DCI in the last MO, the first DCI that is in the plurality of pieces of first DCI and that corresponds to a maximum cell combination identifier may be determined as the last first DCI. It may be understood that the last DCI may alternatively be another possible case, and details are not described herein again.

Optionally, in this embodiment of the present application, the specific cell is a cell associated with the first DCI. In addition, the specific cell may be a cell that needs to consider at least one of the following: a DCI size corresponding to the first DCI, a quantity of blind detection times corresponding to the first DCI, or a blind detection budget corresponding to the first DCI, or the specific cell may be a cell to which a specific DCI size corresponding to the first DCI belongs, or the specific cell may be a cell to which a specific quantity of blind detection times corresponding to the first DCI belongs.

In this embodiment of the present application, a manner of determining the target BWP by the terminal includes any one of the following:

determining, by the terminal, the target BWP according to the BWP indicator and/or the first information in the first DCI; or

determining, by the terminal, the current active BWP or the specific BWP as the target BWP.

It should be noted that the current active BWP in the present application may also be interpreted as the latest active BWP or the most recent active BWP.

It may be understood that the first DCI may include the BWP indicator (BWP indicator). Optionally, the terminal may determine the target BWP according to the BWP indicator in the first DCI. For example, the BWP indicator may include a BWP ID, and the terminal may determine a BWP corresponding to the BWP ID as the target BWP.

Alternatively, the terminal may determine the target BWP according to the first information in the first DCI. The first information indicates at least one of the following: the target BWP determined according to the first DCI is the current active BWP, the first DCI does not indicate or trigger a BWP change, or the terminal ignores the X0 bits; or the first information indicates at least one of the following: the target BWP determined according to the first DCI is not the current active BWP, the first DCI indicates or triggers a BWP change, or the terminal determines the target BWP based on the X0 bits.

For example, if the first information indicates that the target BWP determined according to the first DCI is the current active BWP, the terminal determines the current active BWP as the target BWP. Alternatively, if the first information indicates that the target BWP determined according to the first DCI is not the current active BWP, the terminal may determine the target BWP according to the BWP indicator, and change from the current active BWP to the target BWP. Certainly, specific content of the first information may alternatively be another possible case, and details are not described herein again.

Alternatively, if the first DCI does not include the BWP indicator, or the BWP indicator in the first DCI is of 0 bits, the terminal may determine the current active BWP or the specific BWP as the target BWP corresponding to the first DCI in this case.

Optionally, the specific BWP includes any one of the following: a first active BWP (first active BWP), an initial BWP (initial BWP), a default BWP (default BWP), a dormant BWP (dormant BWP), a first BWP within an activation time (a BWP corresponding to firstWithinActiveTimeBWP-Id), or a first BWP outside an activation time (a BWP corresponding to firstOutsideActiveTimeBWP-Id).

For example, if the BWP indicator in the first DCI is of 0 bits, the target BWP determined by the terminal according to the first DCI is an initial BWP, or the BWP corresponding to the first DCI (or referred to as a scheduled BWP) is an initial BWP.

In this embodiment of the present application, the terminal may determine the target BWP according to the BWP indicator and/or the first information in the first DCI. If the BWP indicator in the first DCI is of 0 bits or the first DCI does not include the BWP indicator, the terminal can also determine the active BWP or the specific BWP as the target BWP corresponding to the first DCI, thereby making determining of the target BWP by the terminal clear.

Step 202: The terminal performs transmission on the target BWP.

It may be understood that after the terminal determines the target BWP according to the first DCI, the terminal can perform transmission on the target BWP, to ensure communication between the terminal and the network-side device in a scenario of multi-cell scheduling.

Optionally, the step 202 may include:
changing, by the terminal, from a source BWP to the target BWP, and performing transmission on the target BWP.

For example, after determining the target BWP according to the first DCI, the terminal may perform a BWP change, for example, change from the current active BWP to the target BWP, and perform transmission on the target BWP.

It should be noted that if the target BWP determined by the terminal according to the first DCI is the same as the source BWP, for example, the target BWP is the current active BWP, the terminal does not need to perform a BWP change, that is, the terminal may still perform transmission on the current active BWP.

Optionally, the source BWP includes at least one of the following:

the current active BWP; or
a BWP determined according to historical first DCI.

The historical first DCI may also be interpreted as previous first DCI, earlier first DCI, or the like, for example, first DCI before current first DCI.

In a solution provided in this embodiment of the present application, the terminal can determine the target BWP according to the first DCI capable of scheduling a plurality of cells or a plurality of carriers, or determine the current active BWP or the specific BWP as the target BWP, and then perform transmission on the target BWP. Therefore, it is clear how the terminal determines the target BWP for performing transmission, so as to ensure communication between the terminal and the network-side device in a multi-cell scheduling scenario.

In this embodiment of the present application, the first DCI may include a BWP indicator. Optionally, the BWP indicator includes any one of the following:

X0 bits; or

$$X0 + X1 \text{ bits;}$$

where the X0 bits are related to determining the target BWP according to the first DCI, and X0 and X1 are positive integers.

In one case, the BWP indicator includes X0 bits, where $X0 = \lceil \log_2(n_{\text{BWP}}) \rceil$, if $n_{\text{BWP,RRC}} \leq 3$, $n_{\text{BWP}} = n_{\text{BWP, RRC}} + 1$, if $n_{\text{BWP,RRC}} > 3$, $n_{\text{BWP}} = n_{\text{BWP,RRC}}$, and $n_{\text{BWP,RRC}}$ is a quantity of uplink BWPs or downlink BWPs. For example, $n_{\text{BWP,RRC}}$ is a quantity of uplink BWPs on a cell with a largest quantity of uplink BWPs, or is a quantity of downlink BWPs on a cell with a largest quantity of downlink BWPs. Further, $n_{\text{BWP,RRC}}$ is a quantity of uplink BWPs excluding an initial uplink BWP on a target cell, or a quantity of downlink BWPs excluding an initial downlink BWP on a target cell, and the target cell is a cell with a largest quantity of uplink BWPs or downlink BWPs.

In another case, the BWP indicator includes X0+X1 bits, where a manner of determining X0 is as described above, and X1 may be specified in a protocol, configured by the network-side device, or deduced by the terminal. Optionally, the X1 bits are X1 least significant bits (X1 least significant bit, X1 LSB), X1 most significant bits (X1 most significant bit, X1 MSB), X1 leftmost bits, or X1 rightmost bits in the BWP indicator.

Alternatively, the BWP indicator has only X0 bits. The first DCI no longer carries the first information of X1 bits. The first information of X1 bits may be specified in a protocol, configured by the network-side device, or deduced by the terminal.

It should be noted that when the first information indicates the terminal to ignore at least some bits of the BWP indicator, or indicates the terminal to determine the target BWP based on at least some bits of the BWP indicator, the at least some bits of the BWP indicator are the X0 bits.

Optionally, when the BWP indicator includes the X0+X1 bits, the BWP indicator includes the first information of the X1 bits, and the first information is used to indicate at least one of the following: the target BWP determined according to the first DCI is the current active BWP, the first DCI does not indicate or trigger a BWP change, or the terminal ignores the X0 bits; or the first information is used to indicate at least one of the following: the target BWP determined according to the first DCI is not the current active BWP, the first DCI indicates or triggers a BWP change, or the terminal determines the target BWP based on the X0 bits.

Alternatively, in another optional implementation, when the BWP indicator includes the X0 bits, the first DCI further includes the first information of the X1 bits. That is, when the BWP indicator is of the X0 bits, the first DCI may include the first information of the X1 bits, and the first information is used to indicate at least one of the following: the target BWP determined (or referred to as corresponding to or scheduled) according to the first DCI is the current active BWP, the first DCI does not indicate or trigger a BWP change, the terminal ignores the X0 bits, or the X0 bits are set to a special value or an invalid value; or the first information is used to indicate at least one of the following: the target BWP determined according to the first DCI is not the current active BWP, the first DCI indicates or triggers a BWP change, or the terminal determines the target BWP based on the X0 bits.

For example, the BWP indicator in the first DCI includes 3 bits (bit). If the first bit=1, it indicates that the first DCI schedules the current active BWP, that is, it is not necessary to perform a BWP change.

For another example, the first DCI schedules a cell combination 1 (cell 1 and cell 2), and BWP indicator includes 3 bits. If the first bit=0, it indicates that the terminal needs to determine a scheduled BWP combination by using the other 2 bits. If values of the other 2 bits correspond to a BWP combination (BWP 2, BWP 2), that is, it is determined that the target BWP is (BWP 2, BWP 2), the UE performs sending or receiving on cell 1 BWP 2 and cell 2 BWP 2.

It should be noted that the first information may indicate the terminal to ignore the X0 bits, or in an optional case, after receiving the first information, the terminal finds that the first DCI does not trigger a BWP change, and the terminal may ignore the X0 bits of the BWP indicator, rather than performing ignoring according to the first information.

In addition, the first information may indicate the terminal to determine the target BWP based on the X0 bits, or in an optional case, after receiving the first information, the terminal finds that the first DCI triggers a BWP change, and the terminal may determine the target BWP based on the X0 bits of the BWP indicator, for example, determine the current active BWP as the target BWP.

Optionally, in this embodiment of the present application, the determining, by the terminal, the target BWP according to the BWP indicator in the first DCI includes:

determining, by the terminal, the target BWP based on X bits of the BWP indicator in the first DCI, where X is a positive integer. $X = \lceil \log_2(n_{BWP}) \rceil$, if $n_{BWP,RRC} \leq 3$, $n_{BWP} = n_{BWP,RRC} + 1$, if $n_{BWP,RRC} > 3$, $n_{BWP} = n_{BWP,RRC}$, and $n_{BWP,RRC}$ is a quantity of uplink BWPs or downlink BWPs. Optionally, the $n_{BWP,RRC}$ is a quantity of uplink BWPs excluding an initial uplink BWP on a target cell, or a quantity of downlink BWPs excluding an initial downlink BWP on a target cell, and the target cell is at least one cell in configured cells, a cell combination, or a cell set.

For example, the BWP indicator has 2 bits, but a specific cell has only two BWPs. Therefore, for this cell, a corresponding or scheduled BWP (that is, the target BWP) is determined only based on a value of a most or least significant bit of the BWP indicator. In this way, when a quantity of BWPs on a cell is less than a quantity of BWPs that can be indicated by the BWP indicator, it is clear which part of the BWP indicator should be read to determine a corresponding or scheduled BWP.

In some cases, the X bits may be the foregoing X0 bits.

Optionally, the determining, by the terminal, the target BWP based on X bits of the BWP indicator in the first DCI includes:

for a target cell, determining, by the terminal, the target BWP based on the X bits of the BWP indicator in the first DCI;

where the target cell is at least one cell among a first cell, and the first cell includes any one of the following: configured cells, a cell combination, and a cell set.

For example, for at least some cells in the configured cells, or at least some cells in the cell combination, or at least some cells in the cell set, the terminal may determine the target BWP based on the BWP indicator in the first DCI or the X bits (e.g., X most significant bits or X least significant bits) of the BWP indicator.

Optionally, for the at least some cells in the configured cells, or the at least some cells in the cell combination, or the at least some cells in the cell set, the target BWP is a BWP whose BWP identifier or index (e.g., BWP ID) is a first value, and the first value includes any one of the following:

> a value corresponding to the BWP indicator, which may be determined, for example, based on a value lookup table Table 7.3.1.1.2-1 of the BWP indicator;
> a value obtained by adding 1 to a value corresponding to the BWP indicator;
> a value obtained by adding 1 to a value corresponding to the X bits in the BWP indicator, which may alternatively be determined based on a lookup table Table 7.3.1.1.2-1 X of X least significant bits (X LSB) of the BWP indicator; or
> a value corresponding to the X bits in the BWP indicator, which may be, for example, a value corresponding to X LSB, a value corresponding to X MSB, a value corresponding to X leftmost bits, or a value corresponding to X rightmost bits.

Further, optionally, when a first condition is met, the target BWP is the BWP whose BWP identifier or index is the first value, where the first condition includes any one of the following:

> (1) a quantity of BWPs of the target cell is greater than or equal to a second value;
> (2) a quantity of BWPs of the target cell is less than a second value;
> (3) among the first cell, a quantity of BWPs on a cell with a largest quantity of BWPs is greater than or equal to a second value;
> (4) a value of the BWP indicator is 0 or all bits corresponding to the BWP indicator are 0;
> (5) a value of the BWP indicator is 1 or all bits corresponding to the BWP indicator are 1;
> (6) among the first cell, a quantity of BWPs on a cell with a largest quantity of BWPs is greater than or equal to a second value, and a value of the BWP indicator is 0 or all bits corresponding to the BWP indicator are 0; or
> (7) among the first cell, a quantity of BWPs on a cell with a largest quantity of BWPs is greater than or equal to a second value, and a value of the BWP indicator is 1 or all bits corresponding to the BWP indicator are 1.

It should be noted that the foregoing second value may be a preset value, for example, 3 or 4. The first cell may refer to configured cells, a cell combination, or a cell set, and the target cell is at least one cell among the first cell. Optionally, the foregoing quantity of BWPs may refer to a quantity of BWPs excluding an initial BWP (initial BWP).

For example, if a quantity of BWPs of a specific cell in the cell combination is greater than 3, it is determined that a target BWP on the cell is a BWP whose BWP ID is the foregoing first value; or regardless of whether a quantity of BWPs of a specific cell in the cell combination is greater than 3, it is determined that a target BWP on the cell is a BWP whose BWP ID is the foregoing first value; or when a quantity of BWPs of a specific cell in the cell combination is not greater than 3, it is determined that a target BWP on the cell is BWP whose BWP ID is the foregoing first value.

Alternatively, if in the configured cells, in the cell combination, or in the cell set, the quantity of BWPs on the cell with the largest quantity of BWPs is greater than 3, for example, the quantity of BWPs is equal to 4, for a cell in the configured cells, in the cell combination, or in the cell set, regardless of whether a quantity of BWPs on the cell is greater than 3, the terminal may determine the BWP whose BWP ID is the foregoing first value as a target BWP on the cell. For example, in addition to the initial BWP, when a quantity of BWPs on a specific cell in the cell combination is 1, 2, 3, or 4, a BWP (that is, a target BWP) indicated (or corresponding to or scheduled) by the first DCI is a BWP (on the cell) whose corresponding BWP ID=BWP indicator value+1.

Alternatively, if in the configured cells, in the cell combination, or in the cell set, the quantity of BWPs on the cell with the largest quantity of BWPs is greater than 3, for example, the quantity of BWPs is equal to 4, when a value of the BWP indicator is 0 or all bits of the BWP indicator are 0, for a cell in the configured cells, in the cell combination, or in the cell set, regardless of whether a quantity of BWPs on the cell is greater than 3, the terminal may determine the BWP whose BWP ID is the foregoing first value as a target BWP on the cell. For example, in addition to the initial BWP, when a quantity of BWPs on a specific cell in the cell combination is 1, 2, 3, or 4, and the BWP indicator of the first DCI is 2 bits and indicates 00, for the cell, a BWP (that is, a target BWP) indicated (or corresponding to or scheduled) by the first DCI is a BWP (on the cell) whose corresponding BWP ID=BWP indicator value+1.

It may be understood that the target BWP may be determined in the foregoing another possible case, and excessive examples are omitted in this embodiment. In this embodiment of the present application, by means of limitation of the foregoing first condition, it is clear how to determine a target BWP in different cases, so as to ensure that the terminal can perform transmission based on the target BWP.

Optionally, a value of the BWP indicator in the first DCI or a value of the X bits of the BWP indicator meets any one of the following:

> (1) corresponding to a BWP identifier or index (e.g., BWP ID) on one or more cells;
> (2) corresponding to joint encoding of a BWP identifier or index on one or more cells;

(3) corresponding to a BWP combination formed by BWPs of one or more cells, for example, BWP indicator=00 corresponds to a BWP combination of BWP 1 and BWP 2, and assuming that the first DCI schedules cell 1 and cell 2, BWP indicator=00 represents scheduling cell 1 BWP 1 and cell 2 BWP 2.

(4) being a third value, and in this case, indicating that the target BWP is the current active BWP; or

(5) being a fourth value, and in this case, indicating that the target BWP is a specific BWP, where the specific BWP includes at least one of the following: a first active BWP, an initial BWP, a default BWP, a dormant BWP, a first BWP within an activation time, or a first BWP outside an activation time. For example, when a BWP indicator is carried in the first DCI and has a value of 00, a target BWP corresponding to (or scheduled by) the first DCI is an initial BWP, or a target BWP determined according to the first DCI is an initial BWP.

It should be noted that the third value and the fourth value may be preset values.

In this embodiment of the present application, when the target BWP determined by the terminal according to the first DCI includes at least some BWPs corresponding to a second cell (e.g., BWPs corresponding to at least some cells among the second cell), the method further includes:

determining, by the terminal based on a first object, the at least some BWPs corresponding to the second cell, where the first object includes:

first information of the X1 bits that exists in the first DCI, or the X0+X1 bits included in the BWP indicator;

The second cell is N cell sets or each cell set or a specific cell set, or the second cell is N cell combinations or each cell combination or a specific cell combination, and N is an integer greater than or equal to 1.

For example, for a specific cell set or cell combination, if the BWP indicator includes X0 bits and the first DCI has the first information of the X1 bits, the terminal determines, based on the first information of the X1 bits that exists in the first DCI, at least some BWPs corresponding to these cell sets or cell combinations, for example, BWPs corresponding to at least some cells in these cell sets or cell combinations; or if the BWP indicator includes X0+X1 bits, the terminal determines, based on the X0+X1 bits included in the BWP indicator, at least some BWPs corresponding to these cell sets or cell combinations.

In this way, when scheduling some cell sets or cell combinations, the terminal may determine a scheduled BWP based on the X1 bits or the X0+X1 bits.

Optionally, when the target BWP determined by the terminal according to the first DCI includes at least some BWPs corresponding to a second cell, the method further includes:

determining, by the terminal based on a second object, the at least some BWPs corresponding to the second cell, where the second object includes at least one of the following:

(1) the current active BWP;
(2) a first behavior, where the first behavior includes that the terminal ignores or reads at least some bits of the BWP indicator;
(3) the at least some bits of the BWP indicator of the first DCI being of a specific value or an invalid value, or no BWP indicator existing in the first DCI; or
(4) the BWP indicator of the first DCI;

where the second cell is L cell sets or each cell set or a specific cell set, or the second cell is L cell combinations or each cell combination or a specific cell combination, and L is an integer greater than or equal to 1.

Specifically, for the foregoing (1), when the second object includes the current active BWP, that is, for the second cell (L cell sets or each cell set or a specific cell set, or L cell combinations or each cell combination or a specific cell combination), when the terminal determines a corresponding (or scheduled) BWP according to the first DCI, the terminal determines, based on the current active BWP, at least some BWPs corresponding to the second cell, in other words, the terminal determines that the at least some BWPs corresponding to the second cell are the current active BWP. In this way, it is configured or specified that when scheduling some cell sets or cell combinations, the terminal can only schedule and activate BWPs, which may be further understood as that a BWP change on these cells cannot be triggered by using the first DCI.

For the foregoing (2), for the second cell (L cell sets or each cell set or a specific cell set, or L cell combinations or each cell combination or a specific cell combination), when the terminal determines a corresponding (or scheduled) BWP according to the first DCI:

a. the terminal may ignore at least some bits of the BWP indicator in the first DCI, and in this way, it is configured or specified that when scheduling some cell sets or cell combinations, the terminal does not determine the scheduled BWP according to the BWP indicator; and

b. the terminal needs to read at least some bits of the BWP indicator, and in this way, it is configured or specified that when scheduling some cell sets or cell combinations, the terminal needs to determine the scheduled BWP according to the BWP indicator.

For the foregoing (3), for the second cell (L cell sets or each cell set or a specific cell set, or L cell combinations or each cell combination or a specific cell combination), when the terminal determines a corresponding (or scheduled) BWP according to the first DCI, at least some bits of the BWP indicator are designated as a special value or an invalid value, or in some cases, no BWP indicator exists in the first DCI. In this way, it is configured or specified that when scheduling some cell sets or cell combinations, the terminal does not determine the scheduled BWP according to the BWP indicator.

For the foregoing (4), for the second cell (L cell sets or each cell set or a specific cell set, or L cell combinations or each cell combination or a specific cell combination), when the terminal determines a corresponding (or scheduled) BWP according to the first DCI, the terminal determines, according to the BWP indicator in the first DCI, the BWP corresponding to (or scheduled by) the second cell. In this way, it is configured or specified that when scheduling some cell sets or cell combinations, the terminal needs to determine the scheduled BWP according to the BWP indicator.

Optionally, the method further includes:
obtaining, by the terminal, second information corresponding to the second cell, where the second information is used to indicate the first object or the second object.

That is, the second information may be configured for the second cell, and the foregoing first object or second object are indicated by using the second information, so that the terminal can perform a related behavior on the second cell according to the second information, to determine a BWP corresponding to the second cell.

Optionally, a quantity of BWPs corresponding to at least some cells among the second cell does not exceed a first preset value or is not less than a second preset value or meets a preset range. For example, a quantity of BWPs corresponding to at least some cells among the second cell does not exceed 1, or is not less than 3, or is within a specific preset range. In this way, an upper or lower limit or a range of a value of the quantity of BWPs is specified.

For example, if there is only one BWP for each cell in a cell combination, when the terminal determines a corresponding (or scheduled) BWP according to the first DCI, the terminal determines that the BWP corresponding to the cell combination is the current active BWP.

It should be noted that the foregoing quantity of BWPs may be a quantity of uplink BWPs or a quantity of downlink BWP excluding an initial BWP.

Optionally, in this embodiment of the present application, the method further includes:

sending, by the terminal, a first parameter that indicates a capability of the first DCI, or obtaining, by the terminal, a first parameter, where the first parameter indicates at least one of the following:

(1) a quantity of first DCI corresponding to a first cell set that the terminal may receive or may blindly detect or may process within K time units;
(2) a quantity of DCI corresponding to a first cell set that the terminal may receive or may blindly detect or may process within K time units, where optionally, the DCI may include the first DCI;
(3) a quantity of first DCI corresponding to a first cell combination that the terminal may receive or may blindly detect or may process within K time units; or
(4) a quantity of DCI corresponding to a first cell combination that the terminal may receive or may blindly detect or may process within K time units, where optionally, the DCI may include the first DCI;

where $K \geq 1$, the first cell set is each cell set or M1 cell sets or a specific cell set, and $M1 \geq 1$; and the first cell combination is each cell combination or M2 cell combinations or a specific cell combination, and $M2 \geq 1$.

It should be noted that a value of K may be 1, or may be a ratio of two subcarrier spacings (Subcarrier Spacing, SCS). The foregoing corresponding to the first cell set may be interpreted as scheduling or indicating the first cell set, or scheduling or indicating at least some cell combinations or cells in the first cell set; and the foregoing corresponding to the first cell combination may be interpreted as scheduling or indicating the first cell combination, or scheduling or indicating at least some cells in the first cell combination.

Referring to FIG. 3, an embodiment of the present application further provides a transmission method, and the method is applied to a terminal. As shown in FIG. 3, the method includes the following steps:

Step 301: A terminal reports first signaling, or the terminal receives a first configuration of a network-side device;
where the first signaling or the first configuration is related to a BWP change based on first DCI, and the first DCI is DCI capable of scheduling a plurality of cells or a plurality of carriers.

It should be noted that the first signaling may be used by the terminal to report a capability of the terminal, where the capability is related to the first DCI, or is related to multi-cell scheduling, so that the network-side device can be notified by using the first signaling; and the terminal can perform multi-cell scheduling and/or a BWP change by using the first DCI. The first configuration may also be related to the first DCI or related to multi-cell scheduling, so that the network-side device can indicate, by using the first configuration, the terminal to perform multi-cell scheduling and/or a BWP change according to the first DCI. In this embodiment of the present application, by using the first signaling or the first configuration, it can be ensured that in a multi-cell scheduling scenario, the terminal performs multi-cell scheduling and/or a BWP change according to the first DCI, to ensure smooth communication between the terminal and the network-side device.

In this embodiment of the present application, the first signaling may be existing signaling, for example, bwp-DiffNumerology or bwp-SameNumerology, or may be newly defined signaling. For example, the first signaling is existing signaling, but the first signaling may be applicable to performing a BWP change according to the first DCI.

Optionally, the first signaling is used to indicate at least one of the following:

the terminal supports, on all preset objects, the BWP change based on the first DCI; or
the terminal supports, on all preset objects, a BWP change between BWPs based on a same parameter set (Numerology) or a BWP change between BWPs with different Numerology;
where the preset objects include at least one of the following: a band combination, a band, a cell, or a carrier.

For example, the terminal indicates, by using the first signaling, that the terminal supports, on all preset objects (a band combination (band combination), a band (band), a cell (cell), and a carrier), a BWP change (BWP change) and/or BWP adaptation (BWP adaptation) based on the first DCI.

Alternatively, the terminal indicates, by using the first signaling, that the terminal supports, on all preset objects (a band combination (band combination), a band (band), a cell (cell), and a carrier), a BWP change and/or BWP adaptation based on the first DCI (or referred to as triggered by the first DCI) between BWPs with same Numerology, or indicates, by using the first signaling, that the terminal supports, on all preset objects (a band combination (band combination), a band (band), a cell (cell), and a carrier), a BWP change and/or BWP adaptation based on the first DCI (or referred to as triggered by the first DCI) between BWPs with different Numerology.

Optionally, the first configuration is used to indicate at least one of the following:

supporting or performing, on preset objects, the BWP change based on the first DCI; or
supporting or performing, on preset objects, a BWP change between BWPs with a same parameter set Numerology or a BWP change between BWPs with different Numerology;
where the preset objects include at least one of the following: a band combination, a band, a cell, or a carrier.

For example, a base station indicates, by using the first configuration, the terminal to support, on all preset objects (a band combination (band combination), a band (band), a cell (cell), and a carrier), a BWP change and/or BWP adaptation based on the first DCI.

Alternatively, the base station indicates, by using the first configuration, that the terminal supports, on all preset objects (a band combination (band combination), a band (band), a cell (cell), and a carrier), a BWP change and/or BWP adaptation based on the first DCI (or referred to as triggered by the first DCI) between BWPs with same Numerology, or indicates, by using the first configuration, that the terminal supports, on all preset objects (a band combination (band combination), a band (band), a cell (cell), and a carrier), a BWP change and/or BWP adaptation based on the first DCI (or referred to as triggered by the first DCI) between BWPs with different Numerology.

Optionally, the preset objects support or are configured to perform multi-cell scheduling, or the preset objects support or are configured with the first DCI. For example, the preset object are carriers that support multi-cell scheduling or are configured with the first DCI.

Optionally, the first signaling or the first configuration includes at least one of the following:

third information, where the third information is used to indicate a BWP change with same Numerology, or is used to indicate that all configured BWPs have same Numerology; or
fourth information, where the fourth information is used to indicate a BWP change with different Numerology, or is used to indicate that configured BWPs have same or different Numerology.

For example, the terminal sends the first signaling, and the first signaling includes the third information, to represent that a BWP change/adaptation with same Numerology (BWP change/adaptation with same numerology) is supported, or represent that BWPs that support a configuration of the terminal have same Numerology.

For another example, the terminal sends first signaling, where the first signaling includes the fourth information, to indicate that a BWP change with different Numerology (BWP change/adaptation with different numerology) is supported, or indicate that BWPs that support the configuration of the terminal may have same or different Numerology.

It should be noted that the foregoing first signaling may be existing signaling, for example, bwp-DiffNumerology or bwp-SameNumerology, or may be newly defined signaling.

In this embodiment of the present application, the terminal notifies, by using the first signaling, the network-side device of whether the BWP change based on the first DCI can be performed, or the network-side device notifies, by using the first configuration, the terminal of whether the BWP change based on the first DCI can be performed. For example, the terminal reports the first signaling to notify that the terminal supports a BWP change with a same SCS on some bands or cells, for example, the terminal supports at least one of the following protocols or capabilities: Type A BWP adaptation with same numerology (which may be specifically bwp-SameNumerology), Type B BWP adaptation with same numerology (which may be specifically bwp-SameNumerology), or BWP adaptation with different numerology (which may be specifically bwp-DiffNumerology). Therefore, the BWP change based on the first DCI can be performed on these bands or cells.

For example, the terminal reports the first signaling, to indicate to support BWP adaptation with different numerology on band 1, and support Type B BWP adaptation with same numerology on band 2. If the first DCI schedules cells on band 1 and band 2, only BWP adaptation/change with same numerology can be ensured to be performed on these cells.

Optionally, when the terminal performs multi-cell scheduling or performs transmission of the first DCI based on the first signaling or the first configuration, the method further includes at least one of the following:

(1) the terminal performs multi-cell scheduling or receives the first DCI on at least some of the preset objects, where the preset objects are configured or indicated to have BWPs with same or different Numerology;
(2) the terminal is configured with multi-cell scheduling or the first DCI on at least some of the preset objects, where the preset objects are configured or indicated with a BWP change based on same or different Numerology;
(3) the terminal does not expect to perform multi-cell scheduling or receive the first DCI on the preset objects, where the preset objects are not configured or not indicated with a BWP change based on same or different Numerology;
(4) the terminal does not expect a cell set or a cell combination to include preset objects, where the preset objects are not configured or not indicated to support a BWP change based on same or different Numerology, or the preset objects are not configured or not indicated to support the BWP change based on the first DCI; or
(5) when a third condition is met, a band, a cell, or a carrier in a cell set needs to be configured with BWPs with same Numerology, or a band, a cell, or a carrier in a cell combination needs to be configured to with BWPs with same Numerology, where the third condition is any one of the following: the first DCI includes a BWP indication, the terminal supports or configures or needs to perform multi-cell scheduling, or the terminal supports or configures or needs to perform the BWP change based on the first DCI.

It should be noted that the preset objects include at least one of the following: a band combination, a band, a cell, or a carrier.

The preset objects include at least one of the following: a band combination, a band, a cell, or a carrier.

It should be noted that for manner (5), if the first DCI includes a BWP indication, or the terminal supports or configures or needs to perform multi-cell scheduling, or the terminal supports or configures or needs to perform the BWP change based on the first DCI, a band, a cell, or a carrier in a cell set (or a cell combination) needs to be configured with BWPs with same Numerology.

For example, if the first DCI includes a BWP indicator, it indicates that the first DCI may trigger a BWP change on a plurality of cells. Because the BWP change may be a change between any BWP combinations on these cells, the base station must keep BWP SCSs of these cells the same.

In this embodiment of the present application, by means of the foregoing limitation, it is determined that when the BWP change based on the first DCI needs to be performed, it is ensured that a plurality of bands or cells that support at least a BWP change with a same SCS exist, or a BWP change that can be triggered by the first DCI on which bands or cells is limited. For example, if the first DCI can trigger a plurality of cells to perform a BWP change, the first DCI may trigger only a BWP change on a plurality of cells that are indicated to support the BWP change with a same SCS (e.g., support at least one of the following protocols or capabilities: Type A BWP adaptation with same numerology, Type B BWP adaptation with same numerology, BWP adaptation with different numerology).

For example, the terminal reports the first signaling, to indicate to support BWP adaptation with different numerology on band 1, and support Type B BWP adaptation with same numerology on band 2. If the first DCI schedules cells on band 1 and band 2, the cells on band 1 and band 2 can only be configured with BWPs with a same SCS.

Referring to FIG. 4, an embodiment of the present application further provides a transmission method, and the method is applied to a network-side device. As shown in FIG. 4, the method includes the following steps:

Step 401: A network-side device receives first signaling sent by a terminal, or a network-side device sends a first configuration to a terminal;
where the first signaling or the first configuration is related to a BWP change based on first DCI, and the first DCI is DCI capable of scheduling a plurality of cells or a plurality of carriers.

Optionally, the first signaling is used to indicate at least one of the following:

the terminal supports, on all preset objects, the BWP change based on the first DCI; or
the terminal supports, on all preset objects, a BWP change between BWPs based on a same parameter set Numerology or a BWP change between BWPs with different Numerology;

where the preset objects include at least one of the following: a band combination, a band, a cell, or a carrier.

Optionally, the first configuration is used to indicate at least one of the following:

supporting or performing, on preset objects, the BWP change based on the first DCI; or
supporting or performing, on preset objects, a BWP change between BWPs with a same parameter set Numerology or a BWP change between BWPs with different Numerology;
where the preset objects include at least one of the following: a band combination, a band, a cell, or a carrier.

Optionally, the preset objects support or are configured to perform multi-cell scheduling, or the preset objects support or are configured with the first DCI.

Optionally, the first signaling or the first configuration includes at least one of the following:

third information, where the third information is used to indicate a BWP change with same Numerology, or is used to indicate that all configured BWPs have same Numerology; or
fourth information, where the fourth information is used to indicate a BWP change with different Numerology, or is used to indicate that configured BWPs have same or different Numerology.

Optionally, the first configuration is further used to indicate at least one of the following:

multi-cell scheduling is performed or the first DCI is received on at least some of the preset objects, where the preset objects are configured or indicated to have BWPs with same or different Numerology;
multi-cell scheduling or the first DCI is configured on at least some of the preset objects, where the preset objects are configured or indicated with a BWP change based on same or different Numerology;
multi-cell scheduling is not performed or the first DCI is not received on the preset objects, where the preset objects are not configured or not indicated with a BWP change based on same or different Numerology;
a cell set or a cell combination does not include preset objects, where the preset objects are not configured or not indicated to support a BWP change based on same or different Numerology, or the preset objects are not configured or not indicated to support the BWP change based on the first DCI; or
when a third condition is met, a band, a cell, or a carrier in a cell set needs to be configured with BWPs with same Numerology, or a band, a cell, or a carrier in a cell combination needs to be configured with BWPs with same Numerology, where the third condition is any one of the following: the first DCI includes a BWP indication, the terminal supports or configures or needs to perform multi-cell scheduling, or the terminal supports or configures or needs to perform the BWP change based on the first DCI; where the preset objects include at least one of the following: a band combination, a band, a cell, or a carrier.

In this embodiment of the present application, by using the first signaling or the first configuration, it can be ensured that in a multi-cell scheduling scenario, the terminal performs multi-cell scheduling and/or a BWP change according to the first DCI, to ensure smooth communication between the terminal and the network-side device.

It should be noted that for a related concept and a specific process in this embodiment of the present application, reference may be made to the description in the method embodiment of FIG. 3. To avoid repetition, details are not described herein again. An embodiment of the present application further provides a transmission method, and the method includes the following steps:

Step S1: A terminal reports first signaling, or a terminal receives a first configuration of a network-side device, where the first signaling or the first configuration is related to a BWP change based on first DCI, and the first DCI is DCI capable of scheduling a plurality of cells or a plurality of carriers.
Step S2: The terminal determines a target BWP based on the first signaling or the first configuration, or the terminal determines a current active BWP or a specific BWP as a target BWP.
Step S3: The terminal performs transmission on the target BWP.

It should be noted that for related concepts (e.g., the first DCI and the target BWP) and a specific implementation procedure in this embodiment of the present application reference may be made to the descriptions in the method embodiments of FIG. 2 and FIG. 3. The terminal in this embodiment of the present application can implement all processes implemented by the terminal in the method embodiments of FIG. 2 and FIG. 3, and can achieve a same technical effect. To avoid repetition, details are not described herein again.

To better understand the technical solution of this embodiment, the following describes several specific embodiments.

Embodiment 1:

A terminal sends first signaling to a base station (that is, a network-side device), where the first signaling indicates that a BWP change based on first DCI or a BWP change based on DCI is supported on a specific preset object A (e.g., band 1). However, the terminal does not indicate that the BWP change based on the first DCI or the BWP change based on the DCI is supported on another preset object B (e.g., band 2).

The base station sends the first DCI to the terminal. If the first DCI schedules cells on the preset object A (e.g., cell 1 and cell 2 of band 1), the first DCI may trigger a BWP change, or a target BWP combination corresponding to the first DCI is a BWP combination determined according to BWP indicator information. If the first DCI schedules cells on the preset object B (e.g., cell 3 and cell 4 of band 2), the first DCI may not trigger a BWP change, or a target BWP combination corresponding to the first DCI is a BWP combination formed by current active BWPs.

Embodiment 2:

A terminal sends first signaling to a base station, where the first signaling indicates that a BWP change with same Numerology or a BWP change based on DCI is supported on a specific preset object A (e.g., band 1).

The base station sends first DCI to the terminal. If the first DCI schedules cells on the preset object A (e.g., cell 1 and cell 2 of band 1), the first DCI may trigger a BWP change, or a target BWP combination corresponding to the first DCI is a BWP combination determined according to BWP indicator information, and all BWPs in the target BWP combination should be BWPs with same Numerology. Further, if SCSs of current active BWPs of cell 1 and cell 2 are different, the first DCI does not trigger a BWP change in this case; or, if the SCSs of the current active BWPs of cell 1 and cell 2 are the same, the first DCI may trigger a BWP change in this case.

The terminal sends first signaling to the base station, where the first signaling indicates that a BWP change with different Numerology is supported on a preset object B (e.g., band 2). If the first DCI schedules cells on the preset object B (e.g., cell 3 and cell 4 of band 2), the first DCI may trigger a BWP change, or a target BWP combination corresponding to the first DCI is a BWP combination determined according to BWP indicator information, and BWPs in the target BWP combination may be BWPs with same or different Numerology. Further, if SCSs of current active BWPs of cell 1 and cell 2 are different, the first DCI may trigger a BWP change in this case.

Embodiment 3:

A terminal sends first signaling to a base station, where the first signaling indicates that a BWP change with same Numerology or a BWP change based on DCI is supported on a specific preset object A (e.g., band 1), and indicates that a BWP change with different Numerology is supported on a preset object B (e.g., band 2).

The base station sends first DCI to the terminal. If the first DCI simultaneously schedules a cell on the preset object A (e.g., cell 1 of the band 1) and a cell on the preset object B (e.g., a cell of band 2), the first DCI may trigger a BWP change, or a target BWP combination corresponding to the first DCI is a BWP combination determined according to BWP indicator information, and BWPs in the target BWP combination should be BWPs with same Numerology. Further, if SCSs of current active BWPs of cell 1 and cell 2 are different, the first DCI cannot trigger a BWP change in this case.

The BWP determining method provided in embodiments of the present application may be executed by a BWP determining apparatus. In the embodiments of the present application, that the BWP determining apparatus performs the BWP determining method is used as an example to describe the BWP determining apparatus provided in the embodiments of the present application.

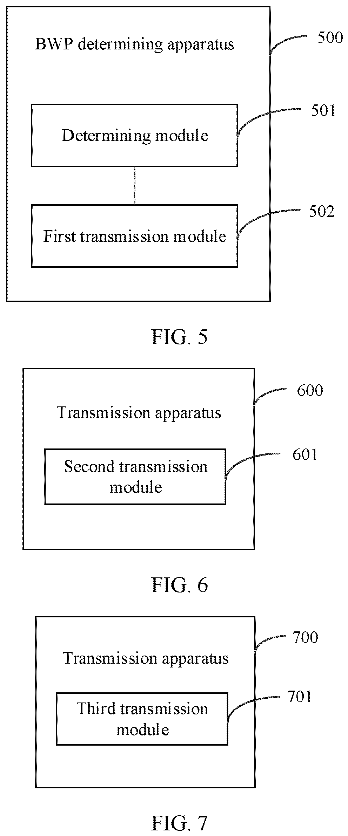

Referring to FIG. 5, FIG. 5 is a structural diagram of a BWP determining apparatus according to an embodiment of the present application. As shown in FIG. 5, the BWP determining apparatus includes:

a determining module 501, configured to determine a target BWP according to target information in first DCI, or configured to determine a current active BWP or a specific BWP as a target BWP corresponding to first DCI, the first DCI being DCI capable of scheduling a plurality of cells or a plurality of carriers; and
a first transmission module 502, configured to perform transmission on the target BWP;
where the target information includes at least one of the following: a BWP indicator or first information; and
the first information includes at least one of the following: the target BWP determined according to the first DCI is the current active BWP, the first DCI does not indicate or trigger a BWP change, or the terminal ignores at least some bits of the BWP indicator; or
the first information indicates at least one of the following: the target BWP determined according to the first DCI is not the current active BWP, the first DCI indicates or triggers a BWP change, or the terminal determines the target BWP based on at least some bits of the BWP indicator.

Optionally, the first transmission module 502 is further configured to:
change from a source BWP to the target BWP, and perform transmission on the target BWP.
Optionally, the source BWP includes at least one of the following:

the current active BWP; or
a BWP determined according to historical first DCI.

Optionally, the first DCI is at least one of the following:

currently received first DCI;

last received first DCI;

DCI corresponding to a specific cell with a minimum or maximum identifier or the index;

DCI that is in DCI within a target time unit and that corresponds to maximum or minimum count information;

DCI that is in DCI within a target time unit and that corresponds to a maximum or minimum identifier or index;

DCI for scheduling a physical downlink shared channel PDSCH or physical uplink shared channel PUSCH whose start time is the earliest or the latest;

DCI for scheduling a PDSCH or PUSCH whose end time is the earliest or the latest;

DCI corresponding to a cell set or cell combination with a maximum or minimum identifier or index;

DCI corresponding to a cell set including a maximum or minimum quantity of cell combinations; or

DCI corresponding to a cell set or cell combination including a maximum or minimum quantity of cells.

Optionally, if a plurality of pieces of first DCI are received within the target time unit, the last first DCI is at least one of the following:

first DCI that is in the plurality of pieces of first DCI and that corresponds to a specific cell with a minimum or maximum identifier or index;

DCI that is in the plurality of pieces of first DCI and that corresponds to maximum or minimum count information;

DCI that is in the plurality of pieces of first DCI and that corresponds to a maximum or minimum identifier or index;

the DCI for scheduling the PDSCH or PUSCH whose start time is the earliest or the latest;

the DCI for scheduling the PDSCH or PUSCH whose end time is the earliest or the latest;

the DCI corresponding to the cell set or cell combination with the maximum or minimum identifier or index;

the DCI corresponding to the cell set including the maximum or minimum quantity of cell combinations; or

the DCI corresponding to the cell set or cell combination including the maximum or minimum quantity of cells.

Optionally, the specific cell is a cell associated with the first DCI.

Optionally, the BWP indicator includes any one of the following:

X0 bits; or

X0+X1 bits;

where the X0 bits are related to determining the target BWP according to the first DCI, and X0 and X1 are positive integers.

Optionally, when the BWP indicator includes the X0 bits, the first DCI further includes the first information of X1 bits.

Optionally, when the BWP indicator includes the X0+X1 bits, the BWP indicator includes the first information of the X1 bits.

Optionally, the X1 bits are X1 least significant bits or X1 most significant bits or X1 leftmost bits or X1 rightmost bits in the BWP indicator.

Optionally, at least some bits of the BWP indicator are the X0 bits.

Optionally, when the target information includes the BWP indicator, the determining module 501 is further configured to:

determine the target BWP based on X bits of the BWP indicator in the first DCI, where X is a positive integer.

Optionally, the determining module 501 is further configured to:

for a target cell, determine the target BWP based on the X bits of the BWP indicator in the first DCI;

where the target cell is at least one cell among a first cell, and the first cell includes any one of the following: configured cells, a cell combination, and a cell set.

Optionally, the target BWP is a BWP whose BWP identifier or index is a first value, and the first value includes any one of the following:

a value obtained by adding 1 to a value corresponding to the X bits in the BWP indicator; or

a value corresponding to the X bits in the BWP indicator.

Optionally, when a first condition is met, the target BWP is the BWP whose BWP identifier or index is the first value, where the first condition includes any one of the following:

a quantity of BWPs of the target cell is greater than or equal to a second value;

a quantity of BWPs of the target cell is less than a second value;

among the first cell, a quantity of BWPs on a cell with a largest quantity of BWPs is greater than or equal to a second value;

a value of the BWP indicator is 0 or all bits corresponding to the BWP indicator are 0;

a value of the BWP indicator is 1 or all bits corresponding to the BWP indicator are 1;

among the first cell, a quantity of BWPs on a cell with a largest quantity of BWPs is greater than or equal to a second value, and a value of the BWP indicator is 0 or all bits corresponding to the BWP indicator are 0; or

among the first cell, a quantity of BWPs on a cell with a largest quantity of BWPs is greater than or equal to a second value, and a value of the BWP indicator is 1 or all bits corresponding to the BWP indicator are 1.

Optionally, a value of the BWP indicator in the first DCI or a value of the X bits of the BWP indicator meets any one of the following:

corresponding to a BWP identifier or index on one or more cells;
corresponding to joint encoding of a BWP identifier or index on one or more cells;
corresponding to a BWP combination formed by BWPs of one or more cells;
being a third value, and the target BWP being the current active BWP; or
being a fourth value, and the target BWP being a specific BWP.

Optionally, the specific BWP includes at least one of the following: a first active BWP, an initial BWP, a default BWP, a dormant BWP, a first BWP within an activation time, or a first BWP outside an activation time.

Optionally, when the target BWP determined by the terminal according to the first DCI includes at least some BWPs corresponding to a second cell, the determining module 501 is further configured to determine, based on a first object, the at least some BWPs corresponding to the second cell, where the first object includes:

first information of the X1 bits that exists in the first DCI, or the X0+X1 bits included in the BWP indicator;
where the second cell is N cell sets or each cell set or a specific cell set, or the second cell is N cell combinations or each cell combination or a specific cell combination, and N is a positive integer.

Optionally, when the target BWP determined by the terminal according to the first DCI includes at least some BWPs corresponding to a second cell, the determining module 501 is further configured to:
determine, based on a second object, the at least some BWPs corresponding to the second cell, where the second object includes at least one of the following:

the current active BWP;
a first behavior, where the first behavior includes ignoring or reading at least some bits of the BWP indicator;
the at least some bits of the BWP indicator of the first DCI being of a specific value or an invalid value, or no BWP indicator existing in the first DCI; or
the BWP indicator of the first DCI;
where the second cell is L cell sets or each cell set or a specific cell set, or the second cell is L cell combinations or each cell combination or a specific cell combination, and L is a positive integer.

Optionally, the apparatus further includes:
an obtaining module, configured to obtain second information corresponding to the second cell, where the second information is used to indicate the first object or the second object.

Optionally, a quantity of BWPs corresponding to at least some cells among the second cell does not exceed a first preset value or is not less than a second preset value or meets a preset range.

Optionally, the first transmission module 502 is further configured to:
send a first parameter that indicates a capability of the first DCI, or obtain a first parameter, where the first parameter indicates at least one of the following:

a quantity of first DCI corresponding to a first cell set that the apparatus may receive or may blindly detect or may process within K time units;
a quantity of DCI corresponding to a first cell set that the apparatus may receive or may blindly detect or may process within K time units;
a quantity of first DCI corresponding to a first cell combination that the apparatus may receive or may blindly detect or may process within K time units; or
a quantity of DCI corresponding to a first cell combination that the apparatus may receive or may blindly detect or may process within K time units;
where K is a positive integer, the first cell set is each cell set or M1 cell sets or a specific cell set, and M1≥1; and the first cell combination is each cell combination or M2 cell combinations or a specific cell combination, and M2≥1.

In this embodiment of the present application, the apparatus can determine the target BWP according to the first DCI capable of scheduling a plurality of cells or a plurality of carriers, and then perform transmission on the target BWP. Therefore, it is clear how to determine the target BWP for performing transmission, so as to ensure communication between the apparatus and the network-side device in a multi-cell scheduling scenario.

The BWP determining apparatus 500 in this embodiment of the present application may be an electronic device, for example, an electronic device with an operating system, or may be a component in an electronic device, for example, an integrated circuit or a chip. The electronic device may be a terminal, or may be another device other than a terminal. For example, the terminal may include but is not limited to the foregoing listed types of the terminal 11. The another device may be a server, a network attached storage (Network Attached Storage, NAS), or the like. This is not specifically limited in this embodiment of the present application.

The BWP determining apparatus 500 provided in this embodiment of the present application can implement processes implemented by the terminal in the method embodiment of FIG. 2, and achieve a same technical effect. To avoid repetition, details are not described herein again.

The transmission method provided in the embodiments of the present application may be performed by a transmission apparatus. In the embodiments of the present application, the transmission apparatus provided in the embodiments of the present application is described by using an example in which the transmission apparatus performs the transmission method.

Referring to FIG. 6, FIG. 6 is a structural diagram of a transmission apparatus according to an embodiment of the present application. As shown in FIG. 6, the transmission apparatus 600 includes:

a second transmission module 601, configured to report first signaling, or configured to receive a first configuration of a network-side device;
where the first signaling or the first configuration is related to a BWP change based on first DCI, and the first DCI is DCI capable of scheduling a plurality of cells or a plurality of carriers.

Optionally, the first signaling is used to indicate at least one of the following:

the apparatus supports, on all preset objects, the BWP change based on the first DCI; or
the apparatus supports, on all preset objects, a BWP change between BWPs based on a same parameter set Numerology or a BWP change between BWPs with different Numerology;
where the preset objects include at least one of the following: a band combination, a band, a cell, or a carrier.

Optionally, the first configuration is used to indicate at least one of the following:

supporting or performing, on preset objects, the BWP change based on the first DCI; or
supporting or performing, on preset objects, a BWP change between BWPs with a same parameter set Numerology or a BWP change between BWPs with different Numerology;
where the preset objects include at least one of the following: a band combination, a band, a cell, or a carrier.

Optionally, the preset objects support or are configured to perform multi-cell scheduling, or the preset objects support or are configured with the first DCI.

Optionally, the first signaling or the first configuration includes at least one of the following:

third information, where the third information is used to indicate a BWP change with same Numerology, or is used to indicate that all configured BWPs have same Numerology; or
fourth information, where the fourth information is used to indicate a BWP change with different Numerology, or is used to indicate that configured BWPs have same or different Numerology.

Optionally, the apparatus further includes an execution module, configured to perform at least one of the following:

performing multi-cell scheduling or receiving the first DCI on at least some of the preset objects, where the preset objects are configured or indicated to have BWPs with same or different Numerology;
configuring multi-cell scheduling or the first DCI on at least some of the preset objects, where the preset objects are configured or indicated with a BWP change based on same or different Numerology;
not expecting to perform multi-cell scheduling or receive the first DCI on the preset objects, where the preset objects are not configured or not indicated with a BWP change based on same or different Numerology;
not expecting a cell set or a cell combination to include preset objects, where the preset objects are not configured or not indicated to support a BWP change based on same or different Numerology, or the preset objects are not configured or not indicated to support the BWP change based on the first DCI; or
when a third condition is met, configuring a band, a cell, or a carrier in a cell set with BWPs with same Numerology as required, or configuring a band, a cell, or a carrier in a cell combination with BWPs with same Numerology as required, where the third condition is any one of the following: the first DCI includes a BWP indication, the terminal supports or configures or needs to perform multi-cell scheduling, or the terminal supports or configures or needs to perform the BWP change based on the first DCI;
where the preset objects include at least one of the following: a band combination, a band, a cell, or a carrier.

The transmission apparatus 600 provided in this embodiment of the present application can implement processes implemented by the terminal in the method embodiment of FIG. 3, and achieve a same technical effect. To avoid repetition, details are not described herein again.

Referring to FIG. 7, FIG. 7 is a structural diagram of another transmission apparatus according to an embodiment of the present application. As shown in FIG. 7, the transmission apparatus 700 includes:

a third transmission module 701, configured to receive first signaling sent by a terminal, or configured to send a first configuration to a terminal;

where the first signaling or the first configuration is related to a BWP change based on first DCI, and the first DCI is DCI capable of scheduling a plurality of cells or a plurality of carriers.

Optionally, the first signaling is used to indicate at least one of the following:

the terminal supports, on all preset objects, the BWP change based on the first DCI; or
the terminal supports, on all preset objects, a BWP change between BWPs based on a same parameter set Numerology or a BWP change between BWPs with different Numerology;
where the preset objects include at least one of the following: a band combination, a band, a cell, or a carrier.

Optionally, the first configuration is used to indicate at least one of the following:

supporting or performing, on preset objects, the BWP change based on the first DCI; or
supporting or performing, on preset objects, a BWP change between BWPs with a same parameter set Numerology or a BWP change between BWPs with different Numerology;
where the preset objects include at least one of the following: a band combination, a band, a cell, or a carrier.

Optionally, the preset objects support or are configured to perform multi-cell scheduling, or the preset objects support or are configured with the first DCI.
Optionally, the first signaling or the first configuration includes at least one of the following:

third information, where the third information is used to indicate a BWP change with same Numerology, or is used to indicate that all configured BWPs have same Numerology; or
fourth information, where the fourth information is used to indicate a BWP change with different Numerology, or is used to indicate that configured BWPs have same or different Numerology.

Optionally, the first configuration is further used to indicate at least one of the following:

multi-cell scheduling is performed or the first DCI is received on at least some of the preset objects, where the preset objects are configured or indicated to have BWPs with same or different Numerology;
multi-cell scheduling or the first DCI is configured on at least some of the preset objects, where the preset objects are configured or indicated with a BWP change based on same or different Numerology;
multi-cell scheduling is not performed or the first DCI is not received on the preset objects, where the preset objects are not configured or not indicated with a BWP change based on same or different Numerology;
a cell set or a cell combination does not include preset objects, where the preset objects are not configured or not indicated to support a BWP change based on same or different Numerology, or the preset objects are not configured or not indicated to support the BWP change based on the first DCI; or
when a third condition is met, a band, a cell, or a carrier in a cell set needs to be configured with BWPs with same Numerology, or a band, a cell, or a carrier in a cell combination needs to be configured with BWPs with same Numerology, where the third condition is any one of the following: the first DCI includes a BWP indication, the terminal supports or configures or needs to perform multi-cell scheduling, or the terminal supports or configures or needs to perform the BWP change based on the first DCI;
where the preset objects include at least one of the following: a band combination, a band, a cell, or a carrier.

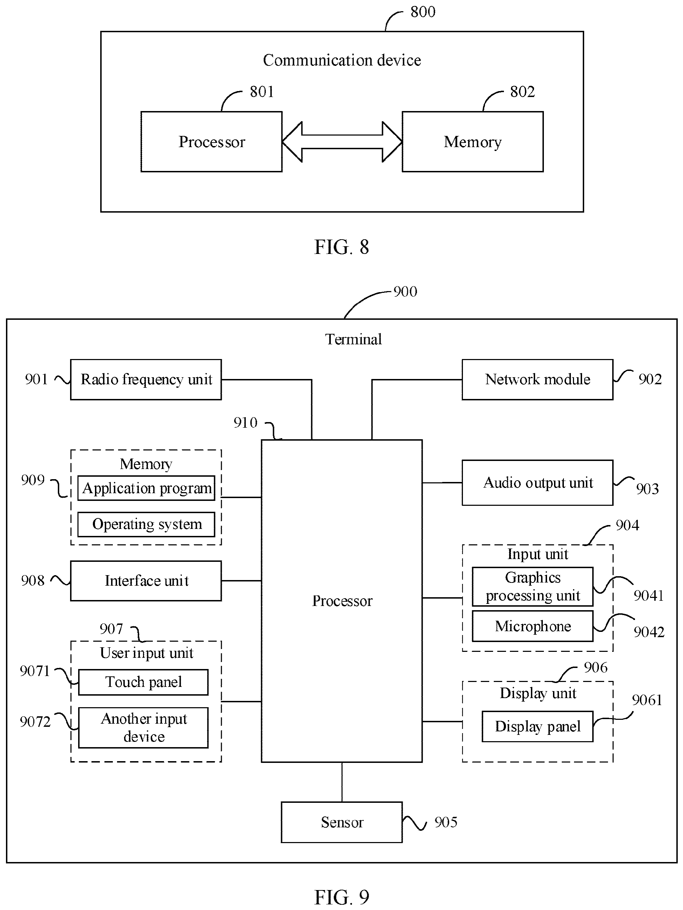

The transmission apparatus 700 provided in this embodiment of the present application can implement processes implemented by the network-side device in the method embodiment of FIG. 4, and achieve a same technical effect. To avoid repetition, details are not described herein again.
Optionally, as shown in FIG. 8, an embodiment of the present application further provides a communication device 800, including a processor 801 and a memory 802, and a program or instructions capable of running on the processor 801 are stored in the memory 802. For example, when the communication device 800 is a terminal, the program or the instructions are executed by the processor 801 to implement the steps in the method embodiment of FIG. 2 or FIG. 3, and a same technical effect can be achieved. When the communication device 800 is a network-side device, the program or the instructions are executed by the processor 801 to implement the steps in the method embodiment of FIG. 4, and a same technical effect can be achieved. To avoid repetition, details are not described herein again.
An embodiment of the present application further provides a terminal, including a processor and a communication interface. The processor is configured to determine a target BWP according to target information in first DCI, or is configured to determine a current active BWP or a specific BWP as a target BWP corresponding to first DCI. The first DCI is DCI capable of scheduling a plurality of cells or a plurality of carriers. The communication interface is configured to perform transmission on the target BWP. Alternatively, in another possible manner, the communication interface is configured to report first signaling, or is configured to receive a first configuration of a network-side device. The first signaling or the first configuration is used to indicate information related to performing a BWP change based on the first DCI, and the first DCI is DCI capable of scheduling a plurality of cells or a plurality of carriers. The terminal embodiment corresponds to the foregoing method embodiment on the terminal side. Each implementation process and implementation of the foregoing method embodiment may be applied to the terminal embodiment, and a same technical effect can be achieved. Specifically, FIG. 9 is a schematic diagram of a hardware structure of a terminal for implementing an embodiment of the present application.

The terminal 900 includes but is not limited to at least some components of a radio frequency unit 901, a network module 902, an audio output unit 903, an input unit 904, a sensor 905, a display unit 906, a user input unit 907, an interface unit 908, a memory 909, a processor 910, and the like.

A person skilled in the art may understand that the terminal 900 may further include a power supply (for example, a battery) that supplies power to each component. The power supply may be logically connected to the processor 910 by using a power management system, to implement functions such as charging management, discharging management, and power consumption management through the power management system. The structure of the terminal shown in FIG. 9 does not constitute a limitation on the terminal. The terminal may include more or fewer components than those shown in the figure, or combine some components, or have different component arrangements. Details are not described herein again.

It should be understood that in this embodiment of the present application, the input unit 904 may include a graphics processing unit (Graphics Processing Unit, GPU) 9041 and a microphone 9042. The graphics processing unit 9041 processes image data of a still picture or a video obtained by an image capture apparatus (for example, a camera) in a video capture mode or an image capture mode. The display unit 906 may include a display panel 9061, and the display panel 9061 may be configured in a form of a liquid crystal display, an organic light-emitting diode, or the like. The user input unit 907 includes at least one of a touch panel 9071 and another input device 9072. The touch panel 9071 is also referred to as a touchscreen. The touch panel 9071 may include two parts: a touch detection apparatus and a touch controller. The another input device 9072 may include but is not limited to a physical keyboard, a function key (such as a volume control key or an on/off key), a trackball, a mouse, or a joystick. Details are not described herein.

In this embodiment of the present application, after receiving downlink data from a network-side device, the radio frequency unit 901 can transmit the downlink data to the processor 910 for processing. In addition, the radio frequency unit 901 can send uplink data to the network-side device. Generally, the radio frequency unit 901 includes but is not limited to an antenna, an amplifier, a transceiver, a coupler, a low-noise amplifier, a duplexer, or the like.

The memory 909 may be configured to store a software program or instructions and various types of data. The memory 909 can mainly include a first storage area for storing a program or instructions and a second storage area for storing data. The first storage area can store an operating system, an application program or instructions required by at least one function (such as a sound play function or an image play function), and the like. In addition, the memory 909 can include a volatile memory or a nonvolatile memory, or the memory 909 can include both a volatile memory and a nonvolatile memory. The nonvolatile memory can be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 909 in this embodiment of the present application includes but is not limited to these memories and any other suitable type of memory.

The processor 910 may include one or more processing units. Optionally, the processor 910 integrates an application processor and a modem processor. The application processor mainly processes operations related to an operating system, a user interface, an application program, and the like. The modem processor, for example, a baseband processor, mainly processes a wireless communication signal. It may be understood that, the foregoing modem processor may not be integrated into the processor 910.

In an implementation, the processor 910 is configured to determine a target BWP according to target information in first DCI, or configured to determine a current active BWP or a specific BWP as a target BWP corresponding to first DCI, the first DCI being DCI capable of scheduling a plurality of cells or a plurality of carriers; and

the radio frequency unit 901 is configured to perform transmission on the target BWP;
where the target information includes at least one of the following: a BWP indicator or first information; and
the first information includes at least one of the following: the target BWP determined according to the first DCI is the current active BWP, the first DCI does not indicate or trigger a BWP change, or the apparatus ignores at least some bits of the BWP indicator; or

the first information indicates at least one of the following: the target BWP determined according to the first DCI is not the current active BWP, the first DCI indicates or triggers a BWP change, or the apparatus determines the target BWP based on at least some bits of the BWP indicator.

Alternatively, in another implementation, the radio frequency unit 901 is configured to report first signaling, or is configured to receive a first configuration of the network-side device. The first signaling or the first configuration is related to a BWP change based on first DCI, and the first DCI is DCI capable of scheduling a plurality of cells or a plurality of carriers.

It should be noted that the terminal provided in this embodiment of the present application can implement processes of the method embodiment of FIG. 2 or FIG. 3, and can achieve a same technical effect. To avoid repetition, details are not described herein again.

An embodiment of the present application further provides a network-side device, including a processor and a communication interface. The communication interface is configured to receive first signaling sent by a terminal, or is configured to send a first configuration to a terminal; where the first signaling or the first configuration is used to indicate information related to performing a BWP change based on first DCI, and the first DCI is DCI capable of scheduling a plurality of cells or a plurality of carriers. The network-side device embodiment corresponds to the foregoing method embodiment for the network-side device, each implementation process and implementation of the foregoing method embodiment can be applied to the network-side device embodiment, and a same technical effect can be achieved.

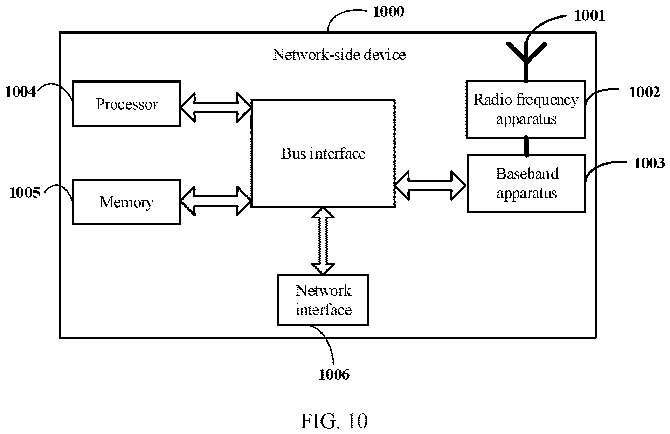

Specifically, an embodiment of the present application further provides a network-side device. As shown in FIG. 10, the network-side device 1000 includes an antenna 1001, a radio frequency apparatus 1002, a baseband apparatus 1003, a processor 1004, and a memory 1005. The antenna 1001 is connected to the radio frequency apparatus 1002. In an uplink direction, the radio frequency apparatus 1002 receives information through the antenna 1001, and sends the received information to the baseband apparatus 1003 for processing. In a downlink direction, the baseband apparatus 1003 processes to-be-sent information, and sends processed information to the radio frequency apparatus 1002. After processing the received information, the radio frequency apparatus 1002 sends processed information through the antenna 1001.

A method performed by the network-side device in the foregoing embodiment may be implemented in the baseband apparatus 1003. The baseband apparatus 1003 includes a baseband processor.

For example, the baseband apparatus 1003 may include at least one baseband board. A plurality of chips are disposed on the baseband board. As shown in FIG. 10, one of the chips is, for example, the baseband processor, and is connected to the memory 1005 by using a bus interface, to invoke a program in the memory 1005 to perform an operation of a network device shown in the foregoing method embodiment.

The network-side device may further include a network interface 1006. For example, the interface is a common public radio interface (common public radio interface, CPRI).

Specifically, the network-side device 1000 in this embodiment of the present application further includes instructions or a program stored in the memory 1005 and capable of running on the processor 1004. The processor 1004 invokes the instructions or the program in the memory 1005 to perform the method performed by the modules shown in FIG. 5, and same technical effects are achieved. To avoid repetition, details are not described herein again.

An embodiment of the present application further provides a readable storage medium. The readable storage medium stores a program or instructions. When the program or the instructions are executed by a processor, the processes in the method embodiment of FIG. 2 are implemented, or the processes in the method embodiment of FIG. 3 are implemented, or the processes in the method embodiment of FIG. 4 are implemented, and a same technical effect can be achieved. To avoid repetition, details are not described herein again.

The processor is a processor in the terminal in the foregoing embodiments. The readable storage medium includes a computer-readable storage medium, such as a computer read-only memory ROM, a random access memory RAM, a magnetic disk, or an optical disc.

An embodiment of the present application further provides a chip. The chip includes a processor and a communication interface. The communication interface is coupled to the processor, and the processor is configured to run a program or instructions to implement the processes of the method embodiment of FIG. 2, or implement the processes of the method embodiment of FIG. 3, or implement the processes of the method embodiment of FIG. 4, and a same technical effect can be achieved. To avoid repetition, details are not described herein again.

It should be understood that, the chip mentioned in this embodiment of the present application can also be referred to as a system-level chip, a system chip, a chip system, a system on chip, or the like.

An embodiment of the present application further provides a computer program/program product. The computer program/program product is stored in a storage medium, and the computer program/program product is executed by at least one processor to implement the processes of the method embodiment of FIG. 2, or implement the processes of the method embodiment of FIG. 3, or implement the processes of the method embodiment of FIG. 4, and a same technical effect can be achieved. To avoid repetition, details are not described herein again.

An embodiment of the present application further provides a communication system, including a terminal and a network-side device. The terminal may be configured to perform the steps of the method of FIG. 2 or FIG. 3, and the network-side device may be configured to perform the steps of the method of FIG. 4.

It should be noted that in this specification, the term "comprise", "include", or any of their variants is intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more constraints, an element preceded by "includes a ..." does not preclude the existence of additional identical elements in the process, method, article, or apparatus that includes the element. In addition, it should be noted that, the scope of the method and apparatus in the implementations of the present application is not limited to performing functions in a sequence shown or discussed, and can further include performing functions in a basically simultaneous manner or in a reverse order based on the functions involved. For example, the described method can be performed in a sequence different from the sequence described, and various steps can be added, omitted, or combined. In addition, features described with reference to some examples can be combined in other examples.

According to the foregoing descriptions of the implementations, a person skilled in the art can clearly understand that the method in the foregoing embodiments can be implemented by software and a necessary general-purpose hardware platform, or certainly can be implemented by hardware. However, in many cases, the former is a better implementation. Based on such an understanding, the technical solutions of the present application essentially or the part contributing to the prior art can be implemented in a form of a computer software product. The computer software product is stored in a storage medium (for example, a ROM/RAM, a magnetic disk, or an optical disc), and includes several instructions for instructing a terminal (which can be a mobile phone, a computer, a server, an air conditioner, a network device, or the like) to perform the methods described in embodiments of the present application.

The foregoing describes embodiments of the present application with reference to the accompanying drawings. However, the present application is not limited to the foregoing specific implementations. The foregoing specific implementations are merely illustrative rather than restrictive. Inspired by the present application, a person of ordinary skill in the art can develop many other manners without departing from principles of the present application and the protection scope of the claims, and all such manners fall within the protection scope of the present application.

**Claims**

1.  A bandwidth part BWP determining method, comprising:

    determining, by a terminal, a target BWP according to target information in first downlink control information DCI, or determining, by the terminal, a current active BWP or a specific BWP as a target BWP corresponding to first DCI, the first DCI being DCI capable of scheduling a plurality of cells or a plurality of carriers; and
    performing, by the terminal, transmission on the target BWP;
    wherein the target information comprises at least one of the following: a BWP indicator or first information; and
    the first information indicates at least one of the following: the target BWP determined according to the first DCI is the current active BWP, the first DCI does not indicate or trigger a BWP change, or the terminal ignores at least some bits of the BWP indicator; or
    the first information indicates at least one of the following: the target BWP determined according to the first DCI is not the current active BWP, the first DCI indicates or triggers a BWP change, or the terminal determines the target BWP based on at least some bits of the BWP indicator.

2.  The method according to claim 1, wherein when the target information comprises the BWP indicator, the determining, by a terminal, a target BWP according to target information in first DCI comprises:
    determining, by the terminal, the target BWP based on X bits of the BWP indicator in the first DCI, wherein X is a positive integer.

3.  The method according to claim 2, wherein a target cell is at least one cell among a first cell, and the first cell comprises any one of the following: configured cells, a cell combination, and a cell set.

4.  The method according to claim 3, wherein the target BWP is a BWP whose BWP identifier or index is a first value, and the first value comprises any one of the following:

    a value obtained by adding 1 to a value corresponding to the X bits in the BWP indicator; or
    a value corresponding to the X bits in the BWP indicator.

5. The method according to claim 4, wherein when a first condition is met, the target BWP is the BWP whose BWP identifier or index is the first value, wherein the first condition comprises any one of the following:

a quantity of BWPs of the target cell is greater than or equal to a second value;
a quantity of BWPs of the target cell is less than a second value;
among the first cell, a quantity of BWPs on a cell with a largest quantity of BWPs is greater than or equal to a second value;
a value of the BWP indicator is 0 or all bits corresponding to the BWP indicator are 0;
a value of the BWP indicator is 1 or all bits corresponding to the BWP indicator are 1;
among the first cell, a quantity of BWPs on a cell with a largest quantity of BWPs is greater than or equal to a second value, and a value of the BWP indicator is 0 or all bits corresponding to the BWP indicator are 0; or
among the first cell, a quantity of BWPs on a cell with a largest quantity of BWPs is greater than or equal to a second value, and a value of the BWP indicator is 1 or all bits corresponding to the BWP indicator are 1.

6. The method according to claim 2, wherein a value of the BWP indicator in the first DCI or a value of the X bits of the BWP indicator meets any one of the following:

corresponding to a BWP identifier or index on one or more cells;
corresponding to joint encoding of a BWP identifier or index on one or more cells;
corresponding to a BWP combination formed by BWPs of one or more cells;
being a third value, and the target BWP being the current active BWP; or
being a fourth value, and the target BWP being a specific BWP.

7. The method according to claim 1 or 6, wherein the specific BWP comprises at least one of the following: a first active BWP, an initial BWP, a default BWP, a dormant BWP, a first BWP within an activation time, or a first BWP outside an activation time.

8. The method according to claim 1, wherein the first DCI comprises at least one of the following:

currently received first DCI;
last received first DCI;
DCI corresponding to a specific cell with a minimum or maximum identifier or index;
DCI that is in DCI within a target time unit and that corresponds to maximum or minimum count information;
DCI that is in DCI within a target time unit and that corresponds to a maximum or minimum identifier or index;
DCI for scheduling a physical downlink shared channel PDSCH or physical uplink shared channel PUSCH whose start time is the earliest or the latest;
DCI for scheduling a PDSCH or PUSCH whose end time is the earliest or the latest;
DCI corresponding to a cell set or cell combination with a maximum or minimum identifier or index;
DCI corresponding to a cell set comprising a maximum or minimum quantity of cell combinations; or
DCI corresponding to a cell set or cell combination comprising a maximum or minimum quantity of cells.

9. The method according to claim 8, wherein when a plurality of pieces of first DCI are received within the target time unit, the last first DCI is at least one of the following:

first DCI that is in the plurality of pieces of first DCI and that corresponds to a specific cell with a minimum or maximum identifier or index;
DCI that is in the plurality of pieces of first DCI and that corresponds to maximum or minimum count information;
DCI that is in the plurality of pieces of first DCI and that corresponds to a maximum or minimum identifier or index;
the DCI for scheduling the PDSCH or PUSCH whose start time is the earliest or the latest;
the DCI for scheduling the PDSCH or PUSCH whose end time is the earliest or the latest;
the DCI corresponding to the cell set or cell combination with the maximum or minimum identifier or index;
the DCI corresponding to the cell set comprising the maximum or minimum quantity of cell combinations; or
the DCI corresponding to the cell set or cell combination comprising the maximum or minimum quantity of cells.

10. The method according to claim 8 or 9, wherein the specific cell is a cell associated with the first DCI.

11. The method according to claim 1, wherein the BWP indicator comprises any one of the following:

X0 bits; or

X0+X1 bits;

wherein the X0 bits are related to determining the target BWP according to the first DCI, and X0 and X1 are positive integers.

12. The method according to claim 11, wherein when the BWP indicator comprises the X0 bits, the first DCI further comprises the first information of X1 bits.

13. The method according to claim 12, wherein when the BWP indicator comprises the X0+X1 bits, the BWP indicator comprises the first information of the X1 bits.

14. The method according to claim 12, wherein the X1 bits are X1 least significant bits or X1 most significant bits or X1 leftmost bits or X1 rightmost bits in the BWP indicator.

15. The method according to claim 11, wherein when the target BWP determined by the terminal according to the first DCI comprises at least some BWPs corresponding to a second cell, the method further comprises:
determining, by the terminal based on a first object, the at least some BWPs corresponding to the second cell, wherein the first object comprises:

first information of the X1 bits that exists in the first DCI, or the X0+X1 bits comprised in the BWP indicator;
wherein the second cell is N cell sets or each cell set or a specific cell set, or the second cell is N cell combinations or each cell combination or a specific cell combination, and N is a positive integer.

16. The method according to claim 1, wherein when the target BWP determined by the terminal according to the first DCI comprises at least some BWPs corresponding to a second cell, the method further comprises:
determining, by the terminal based on a second object, the at least some BWPs corresponding to the second cell, wherein the second object comprises at least one of the following:

the current active BWP;
a first behavior, wherein the first behavior comprises that the terminal ignores or reads at least some bits of the BWP indicator;
the at least some bits of the BWP indicator of the first DCI being of a specific value or an invalid value, or no BWP indicator existing in the first DCI; or
the BWP indicator of the first DCI;
wherein the second cell is L cell sets or each cell set or a specific cell set, or the second cell is L cell combinations or each cell combination or a specific cell combination, and L is a positive integer.

17. The method according to claim 15 or 16, wherein the method further comprises:
obtaining, by the terminal, second information corresponding to the second cell, wherein the second information is used to indicate the first object or the second object.

18. The method according to claim 15 or 16, wherein a quantity of BWPs corresponding to at least some cells among the second cell does not exceed a first preset value or is not less than a second preset value or meets a preset range.

19. The method according to claim 1, wherein the method further comprises:
sending, by the terminal, a first parameter that indicates a capability of the first DCI, or obtaining, by the terminal, a first parameter, wherein the first parameter indicates at least one of the following:

a quantity of first DCI corresponding to a first cell set that the terminal may receive or may blindly detect or may process within K time units;
a quantity of DCI corresponding to a first cell set that the terminal may receive or may blindly detect or may process within K time units;
a quantity of first DCI corresponding to a first cell combination that the terminal may receive or may blindly detect or may process within K time units; or
a quantity of DCI corresponding to a first cell combination that the terminal may receive or may blindly detect or may process within K time units;
wherein K is a positive integer, the first cell set is each cell set or M1 cell sets or a specific cell set, and $M1 \geq 1$; and the first cell combination is each cell combination or M2 cell combinations or a specific cell combination, and $M2 \geq 1$.

20. The method according to claim 1, wherein the performing, by the terminal, transmission on the target BWP comprises:
changing, by the terminal, from a source BWP to the target BWP, and performing transmission on the target BWP.

21. The method according to claim 20, wherein the source BWP comprises at least one of the following:

the current active BWP;
a BWP determined according to historical first DCI.

**22.** The method according to claim 5, wherein at least some bits of the BWP indicator are the X0 bits.

**23.** A transmission method, comprising:

reporting, by a terminal, first signaling, or receiving, by a terminal, a first configuration of a network-side device;
wherein the first signaling or the first configuration is related to a BWP change based on first DCI, and the first DCI is DCI capable of scheduling a plurality of cells or a plurality of carriers.

**24.** The method according to claim 23, wherein the first signaling is used to indicate at least one of the following:

the terminal supports, on all preset objects, the BWP change based on the first DCI; or
the terminal supports, on all preset objects, a BWP change between BWPs based on a same parameter set Numerology or a BWP change between BWPs with different Numerology;
wherein the preset objects comprise at least one of the following: a band combination, a band, a cell, or a carrier.

**25.** The method according to claim 23, wherein the first configuration is used to indicate at least one of the following:

supporting or performing, on preset objects, the BWP change based on the first DCI; or
supporting or performing, on preset objects, a BWP change between BWPs with a same parameter set Numerology or a BWP change between BWPs with different Numerology;
wherein the preset objects comprise at least one of the following: a band combination, a band, a cell, or a carrier.

**26.** The method according to claim 24 or 25, wherein the preset objects support or are configured to perform multi-cell scheduling, or the preset objects support or are configured with the first DCI.

**27.** The method according to claim 23, wherein the first signaling or the first configuration comprises at least one of the following:

third information, wherein the third information is used to indicate a BWP change with same Numerology, or is used to indicate that all configured BWPs have same Numerology; or
fourth information, wherein the fourth information is used to indicate a BWP change with different Numerology, or is used to indicate that configured BWPs have same or different Numerology.

**28.** The method according to claim 23, wherein the method further comprises at least one of the following:

the terminal performs multi-cell scheduling or receives the first DCI on at least some of preset objects, wherein the preset objects are configured or indicated to have BWPs with same or different Numerology;
the terminal is configured with multi-cell scheduling or the first DCI on at least some of preset objects, wherein the preset objects are configured or indicated with a BWP change based on same or different Numerology;
the terminal does not expect to perform multi-cell scheduling or receive the first DCI on preset objects, wherein the preset objects are not configured or not indicated with a BWP change based on same or different Numerology;
the terminal does not expect a cell set or a cell combination to comprise preset objects, wherein the preset objects are not configured or not indicated to support a BWP change based on same or different Numerology, or the preset objects are not configured or not indicated to support the BWP change based on the first DCI; or
when a third condition is met, a band, a cell, or a carrier in a cell set needs to be configured with BWPs with same Numerology, or a band, a cell, or a carrier in a cell combination needs to be configured with BWPs with same Numerology, wherein the third condition is any one of the following: the first DCI comprises a BWP indication, the terminal supports or configures or needs to perform multi-cell scheduling, or the terminal supports or configures or needs to perform the BWP change based on the first DCI;
wherein the preset objects comprise at least one of the following: a band combination, a band, a cell, or a carrier.

**29.** A transmission method, comprising:

receiving, by a network-side device, first signaling sent by a terminal, or sending, by a network-side device, a first configuration to a terminal;
wherein the first signaling or the first configuration is related to a BWP change based on first DCI, and the first DCI is DCI capable of scheduling a plurality of cells or a plurality of carriers.

**30.** The method according to claim 29, wherein the first signaling is used to indicate at least one of the following:

the terminal supports, on all preset objects, the BWP change based on the first DCI; or

the terminal supports, on all preset objects, a BWP change between BWPs based on a same parameter set Numerology or a BWP change between BWPs with different Numerology; wherein the preset objects comprise at least one of the following: a band combination, a band, a cell, or a carrier.

31. The method according to claim 29, wherein the first configuration is used to indicate at least one of the following:

supporting or performing, on preset objects, the BWP change based on the first DCI; or supporting or performing, on preset objects, a BWP change between BWPs with a same parameter set Numerology or a BWP change between BWPs with different Numerology; wherein the preset objects comprise at least one of the following: a band combination, a band, a cell, or a carrier.

32. The method according to claim 30 or 31, wherein the preset objects support or are configured to perform multi-cell scheduling, or the preset objects support or are configured with the first DCI.

33. The method according to claim 29, wherein the first signaling or the first configuration comprises at least one of the following:

third information, wherein the third information is used to indicate a BWP change with same Numerology, or is used to indicate that all configured BWPs have same Numerology; or fourth information, wherein the fourth information is used to indicate a BWP change with different Numerology, or is used to indicate that configured BWPs have same or different Numerology.

34. The method according to claim 29, wherein the first configuration is further used to indicate at least one of the following:

multi-cell scheduling is performed or the first DCI is received on at least some of preset objects, wherein the preset objects are configured or indicated to have BWPs with same or different Numerology; multi-cell scheduling or the first DCI is configured on at least some of preset objects, wherein the preset objects are configured or indicated with a BWP change based on same or different Numerology; multi-cell scheduling is not performed or the first DCI is not received on preset objects, wherein the preset objects are not configured or not indicated with a BWP change based on same or different Numerology; a cell set or a cell combination does not comprise preset objects, wherein the preset objects are not configured or not indicated to support a BWP change based on same or different Numerology, or the preset objects are not configured or not indicated to support the BWP change based on the first DCI; or when a third condition is met, a band, a cell, or a carrier in a cell set needs to be configured with BWPs with same Numerology, or a band, a cell, or a carrier in a cell combination needs to be configured with BWPs with same Numerology, wherein the third condition is any one of the following: the first DCI comprises a BWP indication, the terminal supports or configures or needs to perform multi-cell scheduling, or the terminal supports or configures or needs to perform the BWP change based on the first DCI; wherein the preset objects comprise at least one of the following: a band combination, a band, a cell, or a carrier.

35. A BWP determining apparatus, comprising:

a determining module, configured to determine a target BWP according to target information in first DCI, or configured to determine a current active BWP or a specific BWP as a target BWP corresponding to first DCI, the first DCI being DCI capable of scheduling a plurality of cells or a plurality of carriers; and a first transmission module, configured to perform transmission on the target BWP; wherein the target information comprises at least one of the following: a BWP indicator or first information; and the first information indicates at least one of the following: the target BWP determined according to the first DCI is the current active BWP, the first DCI does not indicate or trigger a BWP change, or the apparatus ignores at least some bits of the BWP indicator; or the first information indicates at least one of the following: the target BWP determined according to the first DCI is not the current active BWP, the first DCI indicates or triggers a BWP change, or the apparatus determines the target BWP based on at least some bits of the BWP indicator.

36. A transmission apparatus, comprising:

a second transmission module, configured to report first signaling, or configured to receive a first configuration of a network-side device;

wherein the first signaling or the first configuration is related to a BWP change based on first DCI, and the first DCI is DCI capable of scheduling a plurality of cells or a plurality of carriers.

37. A transmission apparatus, comprising:

a third transmission module, configured to receive first signaling sent by a terminal, or configured to send a first configuration to a terminal; wherein the first signaling or the first configuration is related to a BWP change based on first DCI, and the first DCI is DCI capable of scheduling a plurality of cells or a plurality of carriers.

38. A terminal, comprising a processor and a memory, wherein the memory stores a program or instructions capable of running on the processor, and when the program or the instructions are executed by the processor, the steps of the BWP determining method according to any one of claims 1 to 22 or the steps of the transmission method according to any one of claims 23 to 28 are implemented.

39. A network-side device, comprising a processor and a memory, wherein the memory stores a program or instructions capable of running on the processor, and when the program or the instructions are executed by the processor, the steps of the transmission method according to any one of claims 29 to 34 are implemented.

40. A readable storage medium, wherein the readable storage medium stores a program or instructions, and when the program or the instructions are executed by a processor, the steps of the BWP determining method according to any one of claims 1 to 22 are implemented, the steps of the transmission method according to any one of the claims 23 to 28 are implemented, or the steps of the transmission method according to any one of the claims 29 to 34 are implemented.

FIG. 1

A terminal determines a target BWP according to target information in first DCI, or the terminal determines a current active BWP or a specific BWP as a target BWP corresponding to first DCI, the first DCI being DCI capable of scheduling a plurality of cells or a plurality of carriers — 201

The terminal performs transmission on the target BWP — 202

FIG. 2

A terminal reports first signaling, or the terminal receives a first configuration of a network-side device — 301

FIG. 3

A network side device receives first signaling sent by a terminal, or a network-side device sends a first configuration to a terminal — 401

FIG. 4

FIG. 5

FIG. 6

FIG. 7

800

Communication device

801

Processor

802

Memory

FIG. 8

900

Terminal

901 Radio frequency unit

Network module 902

910

Memory

909 Application program

Operating system

Audio output unit 903

904

Input unit

Graphics processing unit 9041

Microphone 9042

908 Interface unit

Processor

907

User input unit

9071 Touch panel

9072 Another input device

906

Display unit 9061

Display panel

Sensor 905

FIG. 9

FIG. 10

**INTERNATIONAL SEARCH REPORT**

| International application No. |
|---|
| **PCT/CN2024/073935** |

| A. | CLASSIFICATION OF SUBJECT MATTER |
|---|---|
| | H04W72/04(2023.01)i |

According to International Patent Classification (IPC) or to both national classification and IPC

| B. | FIELDS SEARCHED |
|---|---|

Minimum documentation searched (classification system followed by classification symbols)

    IPC:H04W H04L

Documentation searched other than minimum documentation to the extent that such documents are included in the fields searched

Electronic data base consulted during the international search (name of data base and, where practicable, search terms used)

    CNTXT, ENTXT, ENTXTC, VEN, 3GPP, CNKI, IEEE: 带宽部分, 部分带宽, 切换, 下行控制信息, 多小区, 多个, 指示, 触发, 激活, 非激活, 去激活, 调度, 参数集, BWP, switch+, DCI, multi cell, multi+, mc-DCI, indicat+, trigger+, activat+, inactivat+, schedul+, numerology

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022087575 A1 (QUALCOMM INC.) 28 April 2022 (2022-04-28) description, paragraphs [0036]-[0164] | 1-3, 7-10, 20-21, 23-26, 29-32, 35-40 |
| PX | CN 116326108 A (BEIJING XIAOMI MOBILE SOFTWARE CO., LTD.) 23 June 2023 (2023-06-23) description, paragraphs [0145]-[0468] | 1-3, 7-10, 20-21, 23-26, 29-32, 35-40 |
| A | CN 113541888 A (VIVO MOBILE COMMUNICATION CO., LTD.) 22 October 2021 (2021-10-22) entire document | 1-40 |
| A | CN 114071747 A (VIVO MOBILE COMMUNICATION CO., LTD.) 18 February 2022 (2022-02-18) entire document | 1-40 |
| A | CN 115066963 A (QUALCOMM INC.) 16 September 2022 (2022-09-16) entire document | 1-40 |
| A | WO 2021138890 A1 (QUALCOMM INC. et al.) 15 July 2021 (2021-07-15) entire document | 1-40 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 March 2024** | **06 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2024/073935** |

### C. DOCUMENTS CONSIDERED TO BE RELEVANT

| Category* | Citation of document, with indication, where appropriate, of the relevant passages | Relevant to claim No. |
|---|---|---|
| A | MODERATOR (LENOVO). "Feature lead summary #1 on multi-cell PUSCH/PDSCH scheduling with a single DCI" *3GPP TSG RAN WG1 Meeting #109-e, R1-2205234*, 11 May 2022 (2022-05-11), sections 2-3 | 1-40 |

Form PCT/ISA/210 (second sheet) (July 2022)

**INTERNATIONAL SEARCH REPORT**
Information on patent family members

International application No.

**PCT/CN2024/073935**

| Patent document cited in search report | | | Publication date (day/month/year) | Patent family member(s) | | | Publication date (day/month/year) |
|---|---|---|---|---|---|---|---|
| WO | 2022087575 | A1 | 28 April 2022 | US | 2022124687 | A1 | 21 April 2022 |
| | | | | CN | 116325636 | A | 23 June 2023 |
| | | | | IN | 202327010696 | A | 30 June 2023 |
| | | | | EP | 4233439 | A1 | 30 August 2023 |
| CN | 116326108 | A | 23 June 2023 | None | | | |
| CN | 113541888 | A | 22 October 2021 | WO | 2021208878 | A1 | 21 October 2021 |
| | | | | CN | 113541888 | B | 22 November 2022 |
| | | | | KR | 20230006492 | A | 10 January 2023 |
| | | | | US | 2023038092 | A1 | 09 February 2023 |
| | | | | EP | 4138484 | A1 | 22 February 2023 |
| | | | | JP | 2023520823 | A | 19 May 2023 |
| | | | | EP | 4138484 | A4 | 16 August 2023 |
| | | | | IN | 202217064213 | A | 25 August 2023 |
| CN | 114071747 | A | 18 February 2022 | WO | 2022028468 | A1 | 10 February 2022 |
| | | | | US | 2023189290 | A1 | 15 June 2023 |
| CN | 115066963 | A | 16 September 2022 | US | 2021258996 | A1 | 19 August 2021 |
| | | | | US | 11632787 | B2 | 18 April 2023 |
| | | | | WO | 2021162768 | A1 | 19 August 2021 |
| | | | | EP | 4104601 | A1 | 21 December 2022 |
| | | | | IN | 202247037634 | A | 08 July 2022 |
| WO | 2021138890 | A1 | 15 July 2021 | IN | 202247031387 | A | 10 June 2022 |
| | | | | CN | 114982330 | A | 30 August 2022 |
| | | | | EP | 4088530 | A1 | 16 November 2022 |
| | | | | US | 2023171785 | A1 | 01 June 2023 |
| | | | | EP | 4088530 | A4 | 06 September 2023 |

Form PCT/ISA/210 (patent family annex) (July 2022)

**REFERENCES CITED IN THE DESCRIPTION**

**Patent documents cited in the description**

- CN 202310050792